# EUROPÄISCHE PATENTSCHRIFT

(11) **EP 3 793 962 B1**
(45) Veröffentlichungstag und Bekanntmachung des Hinweises auf die Patenterteilung: **09.11.2022**
(21) Anmeldenummer: 19724511.1
(22) Anmeldetag: 20.05.2019
(51) Int. Cl.: C04B 35/565, C04B 35/80, C04B 38/00, B32B 18/00, C04B 35/571, C04B 35/584, C04B 35/589, C04B 35/597

(54) **KERAMIK-WABENKÖRPER FÜR LEICHTBAUSTRUKTUREN UND HERSTELLUNGSVERFAHREN HIERFÜR**
CERAMIC HONEYCOMB BODY FOR LIGHTWEIGHT STRUCTURES AND CORRESPONDING PRODUCTION METHODS
CORPS ALVÉOLÉ EN CÉRAMIQUE POUR STRUCTURES LÉGÈRES ET PROCÉDÉS POUR SA FABRICATION

(30) Priorität: 18.05.2018 LU 100801
(43) Veröffentlichungstag der Anmeldung: 24.03.2021
(73) Patentinhaber: Euro-Composites S.A., 6401 Echternach (LU)
(72) Erfinder: ALTER, Rolf-Mathias, 6419 Echternach (LU); WINTGENS, Willy, 9907 Troisvierges (LU); HUBERTY, Carsten, 54340 Leiwen (DE); KAMINSKI, Darius, 54668 Ferschweiler (DE)
(74) Vertreter: Lippert Stachow Patentanwälte Rechtsanwälte
(86) Internationale Anmeldenummer: PCT/EP2019/063000
(87) Internationale Veröffentlichungsnummer: WO 2019/219976

(56) Entgegenhaltungen:
- EP-A1- 3 279 055
- EP-A2- 3 050 862
- WO-A1-01/98207
- WO-A1-03/043933
- WO-A1-2010/043783
- DE-A1- 10 008 686
- DE-A1-102005 058 034
- DE-B4- 10 008 686
- US-A- 5 067 999
- US-A1- 2017 190 628

## Beschreibung

Die Erfindung betrifft einen Wabenkörper aus einem Verbundwerkstoff für hochtemperaturfeste, insbesondere feuerfeste Leichtbaustrukturen, insbesondere zur Verwendung als Kern bzw. zur Herstellung von einem Kern zwischen zwei Deckschichten einer Leichtbau-Sandwichstruktur. Ferner betrifft die Erfindung ein Verfahren zum Herstellen eines derartigen Wabenkörpers, einen Waben-Rohling zum Herstellen eines Wabenkörpers und eine hitzebeständige Leichtbau-Sandwichstruktur.

Faserverbundwerkstoffe sind üblicherweise durch Langfasern eingebettet in eine Matrix charakterisiert. Die Langfasern dienen als Träger bzw. Gerüst, um gewünschte mechanische Eigenschaften den Verbundwerkstoffen zu verleihen.

Keramische Faserverbundwerkstoffe weisen typisch eine keramische Matrix auf. Der Begriff Keramik bzw. keramisch bezeichnet hier ganz allgemein sowohl kristalline als auch amorphe Keramikwerkstoffe.

Verbundwerkstoffe aus reinem Kohlenstoff, wie z.B. kohlenstofffaserverstärkte Kohlenstoffe, sind bei hohen Temperaturen im Vakuum oder unter Schutzgas einsetzbar, oxidieren jedoch in der Luft.

Verbundwerkstoffe für hochtemperaturfeste bzw. feuerfeste Leichtbaustrukturen, wie z.B. zum Herstellen von Schutzverkleidungen für Raumfahrt und Luftfahrt, umfassen üblicherweise poröse und durch Kohlenstofffasern oder Siliziumcarbid-Fasern verstärkte Keramikwerkstoffe, z.B. carbidkeramische Werkstoffe wie Siliziumcarbid. Siliziumcarbid hat eine hohe Oxidationsbeständigkeit.

Faserverstärkte carbidkeramische Werkstoffe können durch Pyrolyse bzw. Carbonisieren eines faserverstärkten Rohlings zum Umwandeln von organischem Material in elementaren Kohlenstoff, um eine faserverstärkte Kohlenstoffstruktur zu erhalten, die anschließend siliziert wird, hergestellt werden. Das Silizieren wird üblicherweise z.B. mittels Infiltrieren mit flüssigem Silizium (LSI: liquid silicon infiltration) und Wärmeeinwirkung bei Temperaturen von >1410°C (Schmelzpunkt von Silizium) durchgeführt. Durch das Silizieren wird zumindest ein Teil des Kohlenstoffs mit dem Silizium verbunden und in Siliziumcarbid umgewandelt.

In der Leichtbautechnik ist die Verwendung von Sandwich-Bauteilen aus zwei Deckschichten und einer Kernstruktur in Form eines Wabenkörpers weit verbreitet.

Ein Verfahren zum Herstellen carbidkeramischer Sandwich-Bauteile umfassend Wabenkörper als Kernstruktur ist bereits bekannt. Die Anmeldung EP3050862A2 beschreibt hierzu ein Verfahren, bei dem ein Bauteil mit Sandwichstruktur aus zwei Deckschichten und einem Wabenkörper zwischen den Deckschichten hergestellt wird, wobei die Deckschichten und der Wabenkörper als separate offenporige Kohlenstoffkörper aus einem Prepreg-Material durch Pyrolyse bereitgestellt und nach der Pyrolyse zu einem Sandwichbauteil verbunden, z.B. verklebt werden. Anschließend wird an dem bereits verbundenen Sandwichbauteil das Silizieren, d.h. das Bilden von Siliziumcarbid, unter Anwendung des LSI-Verfahrens durchgeführt, d.h. durch ein Infiltrieren mit flüssigem Silizium, durchgeführt.

Während des konventionellen Silizierens durch das Infiltrieren mit flüssigem Silizium bei Temperaturen, die über dem Schmelzpunkt des Siliziums liegen, verbreitet sich das Silizium durch den Kapillareffekt in dem porösen Bauteil und reagiert mit dem Kohlenstoff an den Wänden der Kapillare zur Bildung von Siliziumcarbid. Die Reichweite des Kapillareffekts in Bezug auf die Bauteilhöhe ist naturgemäß wegen Schwerkrafteinwirkung begrenzt. Dabei kann es außerdem teilweise zum "Blockieren" der Kapillare durch Anhaftung von bereits gebildetem Siliziumcarbid kommen, was den Prozess des Silizierens nicht nur verlangsamt, sondern das Erreichen einer gleichmäßigen Siliziumcarbidverteilung in Bezug auf die Bauteilhöhe zusätzlich erschwert. Der letztgenannte Umstand ist nachteilig für die Reproduzierbarkeit des Verfahrens und für die Homogenität des Produktes. So können z.B. lokale Überschüsse an nicht gebundenem Silizium im Bauteil verbleiben. Es kann ggf. auch zu einer Reaktion vom überschüssigen Silizium mit Kohlenstofffasern des Trägers und einer resultierenden Faserdegradierung kommen, was die mechanischen Eigenschaften verschlechtert. Das überschüssige Silizium muss in zusätzlichen Verfahrensschritten (u.a. durch ein Verdampfen des Siliziums bei einer Temperatur von über 2000°C) entfernt werden, was die Herstellung verteuert.

Eine erste Aufgabe der vorliegenden Erfindung ist es mithin, eine Wabe mit verbesserten Eigenschaften bereitzustellen, die im Vergleich zum Stand der Technik kostengünstig in der Herstellung ist und die sich insbesondere für feuerfeste Leichtbaustrukturen bzw. für Hochtemperaturanwendungen eignet, z.B. zum Herstellen eines Kerns für feuerfeste Leichtbau-Sandwichstrukturen. Diese Aufgabe wird gelöst durch einen Wabenkörper nach Anspruch 1, und unabhängig davon durch einen Waben-Rohling nach Anspruch 16.

Eine weitere Aufgabe ist es, ein vereinfachtes Herstellverfahren für faserverstärkte keramische Wabenstrukturen, möglichst mit erhöhter Reproduzierbarkeit, vorzuschlagen. Diese Aufgabe wird gelöst durch ein Verfahren nach Anspruch 8 als auch durch ein weiteres Verfahren nach Anspruch 9.

Mit dem Begriff "feuerfest" wird vorliegend ein Werkstoff bezeichnet, der für eine Einsatztemperatur von über 600°C geeignet ist (ungeachtet des Kegelfallpunkts und/oder einer des Vorhandenseins einer bestimmten chemischen Reaktion).

Ein gattungsgemäßer Wabenkörper umfasst Wabenzellen mit einem Querschnitt in L/W Ebene, insbesondere einem polygonalen, vorzugsweise näherungsweise hexagonalen Querschnitt, wobei die Zellwände der Wabenzellen aus einem Verbundwerkstoff hergestellt sind, der zumindest einen Träger, insbesondere ein Gewebe oder Gelege aus Fasern, und eine Matrix umfasst. Dabei ist der Träger im Sinne eines Verbundwerkstoffs in die Matrix eingebettet. Ein gattungsgemäßer Wabenkörper eignet sich u.a. zur Verwendung als bzw. zur Herstellung von einem Kern einer Leichtbau-Sandwichstruktur, wobei der Kern zwischen zwei Deckschichten angeordnet und fest mit diesen verbunden werden kann.

Die o.g. erste Aufgabe wird bereits dadurch gelöst, dass die Matrix einen siliziumbasierten Keramikwerkstoff umfasst, ausgewählt aus der Gruppe bestehend aus Siliziumcarbid, Siliziumoxycarbid, Siliziumnitrid, Siliziumcarbonitrid und Siliziumborcarbonitrid, wobei die Matrix entlang der gesamten Höhe der Zellwände in T-Richtung senkrecht zur L/W-Ebene der Wabenzellen einen Massenanteil des siliziumbasierten Keramikwerkstoffs von mindestens 30 Gew.-%, insbesondere von mindestens 40 Gew.-%, vorzugsweise von mehr als 80 Gew.-% aufweist.

Insbesondere kann die Matrix Siliziumcarbid umfassen. Siliziumcarbid zeichnet sich durch außergewöhnliche Hochtemperatur-Festigkeit, Verschleiß-Resistenz und eine hohe Oxidationsbeständigkeit aus. Abwesenheit von Sauerstoff im Siliciumcarbid kann sich positiv auf die Dauerbeständigkeit des Verbundwerkstoffs auswirken.

Gemäß einem Aspekt der Erfindung, weist die Matrix also, insbesondere bezogen auf die Matrix per se (ohne Träger), entlang der gesamten Höhe der Zellwände der Wabenzellen, d.h. durchgehend entlang der Höhe, auf jeder makroskopischen Höhenebene (im Millimeterbereich) einen Massenanteil des siliziumbasierten Keramikwerkstoffs, beispielsweise Siliziumcarbids, Siliziumoxycarbids, Siliziumnitrids, Siliziumcarbonitrids oder Siliziumborcarbonitrids, von mindestens 30 Gew.-%, insbesondere von mindestens 40 Gew.-%, vorzugsweise von mehr als 80 Gew.-% auf.

In anderen Worten, wenn der Wabenkörper gedanklich in mehrere einige Millimeter hohe Schichten senkrecht zu der T-Richtung entlang der gesamten Höhe der Zellwände geschnitten wird, beträgt der Massenanteil eines der o.g. siliziumbasierten Keramikwerkstoffe, bspw. des Siliziumcarbids, an der Matrix in jeder dieser Schichten mindestens 30 Gew.-%, insbesondere von mindestens 40 Gew.-%, vorzugsweise von mehr als 80 Gew.-%. Dies gilt insbesondere auch für die mittleren Schichten des Wabenkörpers, die sich auf etwa halber Höhe der Zellwände befinden.

Durch eine Probenahme des Matrixmaterials aus den beiden auf die T-Richtung bezogen äußeren Bereichen des erfindungsgemäßen Wabenkörpers und dem bzgl. der T-Richtung mittleren Bereich des Wabenkörpers sowie analytischer Bestimmung des Anteils eines der o.g. siliziumbasierten Keramikwerkstoffe, bspw. des Siliziumcarbid-Anteils, in den so entnommenen Proben kann leicht festgestellt werden, ob der Massenanteil des siliziumbasierten Keramikwerkstoffs, bspw. des Siliziumcarbids, in den Proben jeweils mindestens 30 Gew.-%, insbesondere von mindestens 40 Gew.- %, vorzugsweise von mehr als 80 Gew.-% beträgt. Diese Analyse erlaubt zudem mit sehr hoher Wahrscheinlichkeit den Rückschluss eines erfindungsgemäßen Massenanteils des siliziumbasierten Keramikwerkstoffs entlang der gesamten Höhe der Zellwände in T-Richtung.

Geeignete Analyseverfahren zur Bestimmung des Massenanteils eines der o.g. siliziumbasierten Keramikwerkstoffe, bspw. des Siliziumcarbids, sind dem Fachmann bekannt. Die vorliegenden quantitativen Angaben betreffend die ausgehärtete Matrix bzw. den fertiggestellten Faserverbund, insbesondere zu Massenanteilen, beruhen auf Röntgenspektroskopie, nämlich energiedispersiver Röntgenanalyse (REM-EDX). Andere mögliche Analyseverfahren wären z.B. wellenlängendispersive Röntgenspektroskopie (REM-EPMA), die Röntgen-Diffraktometrie (XRD, XRPD), Photolumineszens-Spektroskopie, u.a. der Auger-Spektroskopie, Photoelektronenspektroskopie und Photomessionsspektroskopie, insbesondere Röntgenphotoelektronenspektroskopie und ESCA für die chemische Analyse.

Massenanteile von einzelnen Komponenten einer Mischphase sind hier allgemein nach DIN 1310 in Gewichtsprozenten "Gew.-%", angegeben, und werden als prozentualer Anteil des Gewichts der Komponente an dem Gewicht der Mischphase errechnet. Siliziumcarbid wird hier gemäß chemischer Formel mit SiC bezeichnet.

Vorzugsweise beträgt der Massenanteil an dem siliziumbasierten Keramikwerkstoff, bspw. SiC, in der Matrix mindestens 90 Gew.-%, vorzugsweise mindestens 95 Gew.-%, besonders bevorzugt mindestens 99,5 Gew.-%. Ein hoher Anteil an bspw. SiC ist besonders für die Oxidationsbeständigkeit und die Verschleißfestigkeit des Materials von Vorteil.

In einer bevorzugten Ausführungsform weicht der Massenanteil an dem siliziumbasierten Keramikwerkstoff, bspw. SiC, in der Matrix im mittleren Bereich entlang der T-Richtung um weniger als 20 Gew.-%, insbesondere um weniger als 10 Gew.-%, vorzugsweise um weniger als 1 Gew.-%, vom Massenanteil an SiC in der Matrix in den endseitigen Bereichen der Höhe der Zellwände ab. Eine möglichst homogene Verteilung des siliziumbasierten Keramikwerkstoffs, bspw. SiC, im Wabenkörper ist für die Stabilität des Wabenkörpers von Vorteil. Außerdem ist eine gleichmäßige Verteilung für ein anschließendes Zuschneiden des Wabenkörpers vorteilhaft, da alle Ebenen im Wesentlichen gleichbleibende Eigenschaften erhalten. Das Zuschneiden erfolgt nämlich typisch, in Scheiben senkrecht zur T-Richtung, zu Wabenscheiben in gewünschter Höhe.

Unter dem siliziumbasierten Keramikwerkstoff ist hier allgemein ein o.g. siliziumbasierter Keramikwerkstoff, ausgewählt aus der Gruppe bestehend aus Siliziumcarbid, Siliziumoxycarbid, Siliziumnitrid, Siliziumcarbonitrid und Siliziumborcarbonitrid, gemeint.

Wabenzellen eines Wabenkörpers weisen vorzugsweise Zellwände auf, die senkrecht zur L/W Ebene verlaufen, sodass die Wabenzellen einen gleichbleibenden Querschnitt senkrecht zur T-Richtung in verschiedenen Ebenen entlang der T-Richtung aufweisen. Zumindest eine Mehrheit der Wabenzellen eines Wabenkörpers erstreckt sich vorzugsweise durchgehend und mit einem in etwa gleichbleibendem Querschnitt von einer Seite des Wabenkörpers bis zur einer gegenüberliegenden Seite des Wabenkörpers.

Die Matrix kann einen Massenanteil von freiem Silizium von höchstens 15 Gew.-%, insbesondere von höchstens 10 Gew.-%, vorzugsweise von höchstens 2 Gew.-%, besonders bevorzugt von höchstens 0,5 Gew.-%, aufweisen. Das freie Silizium (chemisch ungebundenes Silizium), d.h. das nicht in chemischen Verbindungen gebundene Silizium, kann z.B. als Überrest von metallischem Silizium, das während des Herstellens der Matrix (s. unten) eingesetzt wurde, vorhanden sein bzw. bleiben. Eine Matrix mit verschwindend geringem Anteil an metallischem Silizium ist besonders zum Herstellen von radardurchläßigen Verbundwerkstoffen von Vorteil.

In Hinsicht auf die schon angeführten Spektroskopiemethoden eignet sich die REM-EDX Methode ebenfalls gut zum Bestimmen des freien Silizium Gehalts in der Matrix. Denkbar wäre auch Röntgen-Diffraktometrie (XRD, XRPD).

Besonders bevorzugt weist die Matrix im Wesentlichen kein freies Silizium auf. Das wirkt einer sog. Spotbildung bzw. Lokalanreicherung vom metallischen Silizium entgegen und führt auch zu verbesserten dielektrischen Eigenschaften des Wabenkörpers, z.B. zwecks Verwendung als radardurchlässigem Bauteil ("stealth-Technik").

Insbesondere beträgt ein Massenanteil organischer Kohlenstoffverbindungen (organischer kohlenstoffhaltiger Substanzen, engl. organic carbon compounds), in der Matrix höchstens 5 Gew.-%, vorzugsweise höchstens 0,5 Gew.-%. Mit dem Massenanteil organischer Kohlenstoffverbindungen in der Matrix ist der Massenanteil des gesamten organischen Kohlenstoffhaltigen Substanzen, die in der Matrix vorhanden sein können, gemeint. Organische Kohlenstoffverbindungen können z.B. als Rest verschiedener organischer Substanzen, die während des Herstellens der Matrix eingesetzt wurden und eventuell nicht vollständig pyrolysiert bzw. carbonisiert wurden, verbleiben. Besonders bevorzugt enthält die Matrix im Wesentlichen keine Reste von organischen Stoffen. Der Massenanteil restlicher organischer Kohlenstoffverbindungen in der Matrix kann z.B. durch Pyrolyse einer Probe der Matrix und einem Vergleich der Gewichte dieser Probe vor und nach Pyrolyse geprüft werden.

Die Matrix weist hingegen vorzugsweise einen gewissen Überschuss an freiem Kohlenstoff, d.h. an nicht siliziertem und sonst chemisch ungebundenem, nicht an chemische Verbindungen gebundenem elementarem Kohlenstoff auf. Vorzugsweise weist die Matrix einen Massenanteil des freien Kohlenstoffs von mindestens 1 Gew.-%, insbesondere von mindestens 10 Gew.-%, jedoch höchstens 25 Gew.-% oder vorzugsweise höchstens 15% auf. Ein Überschuss an freien Kohlenstoff in der Matrix ist besonders für Verbundwerkstoffe mit einem Träger aus Kohlenstofffasern von Vorteil, sodass die Kohlenstofffasern des Trägers nicht von evtl. verbleibendem freiem Silizium bei hohen Temperaturen angegriffen werden können und spröde werden können. Ein vorbestimmter Überschuss von freiem Kohlenstoff kann zudem die Minimierung der Restanteile von freiem Silizium bei geeigneter Parametrierung der SiC-Bildung erlauben (s. unten).

Der Massenanteil des Trägers in dem Verbundwerkstoff d.h. bezogen auf den Verbundwerkstoff insgesamt kann 5 Gew.-% bis 80 Gew.-%, vorzugsweise 10 Gew.-% bis 50 Gew.-%, betragen.

Vorzugsweise ist der Träger aus Fasern hergestellt.

Der Träger kann insbesondere aus einem Gewebe, vorzugsweise aus einem einlagigen Gewebe, besonders bevorzugt aus einem Gewebe mit Leinwandbindung, hergestellt sein.

Der Träger kann insbesondere Kohlenstofffasern umfassen. Der Träger kann z.B. in Form eines Fasergebildes oder Fasergerüstes aus Kohlenstofffasern ausgebildet sein. Alternativ oder ergänzend kann der Träger Keramikfasern, bspw. auch aus SiC, aufweisen. Auch andere kohlenstoffhaltige Träger oder Träger aus anderen hochtemperaturstabilen Fasern wie z.B. Basaltfasern liegen im Rahmen der Erfindung. Der Träger kann auch aus einer Kombination verschiedener, vorzugsweise hochtemperaturfester, Fasern hergestellt sein.

Der Träger kann Glasfasern umfassen, insbesondere aus Glasfasern hergestellt sein, wobei die Glasfasern vorzugsweise Silikat-Glasfasern, besonders bevorzugt Quarzglasfasern sind. Ein Träger aus Quarzglasfasern ist insbesondere für Luftfahrtanwendungen vom Vorteil.

Bei einer Ausführungsform umfasst die Matrix Siliziumcarbid und der Träger Kohlenstofffasern umfasst.

Bei einer Ausführungsform umfasst die Matrix Siliziumoxycarbid und der Träger Silikat-Glasfasern, bevorzugt Quarzglasfasern umfasst. Ein Wabenkörper nach dieser Ausführungsform ist insbesondere für Luftfahrtanwendungen geeignet.

In einer bevorzugten Ausführungsform ist der Träger aus einem Gewebe, besonders bevorzugt aus einem Gewebe mit Leinwandbindung hergestellt. Anders als beim LSI-Verfahren kommt es hier auf Kapillarität bzw. Porosität des Trägers nicht entscheidend an. Eine gewisse Porosität kann für eine gleichmäßige Bildung des siliziumbasierten Keramikwerkstoffs, bspw. des SiC, dennoch vorteilhaft sein.

Der Träger ist vorzugsweise aus einem Kohlenstofffasergewebe hergestellt. Dazu können handelsübliche Kohlenstofffasergewebe eingesetzt werden.

Der Träger kann aus einem Glasfasergewebe hergestellt sein, vorzugsweise aus einem Quarzglasfasergewebe und/oder Silikat-Glasfasergewebe.

Eine Feinheit der Faser des Trägermaterials kann zwischen 1 bis 50K, insbesondere zwischen 3 bis 12K, besonders bevorzugt 3K betragen, wobei z.B. 1K bedeutet, dass 1000 Einzelfasern zu einem Garn zusammengefasst sind. Bevorzugte Flächengewichte zur Auswahl eines Trägermaterials (vor Fertigstellung des Verbunds) sind weiter unten definiert. Die Feinheit der Faser in mm kann aus dem Durchmesser einer Einzelfaser, bspw. einer an sich bekannten Kohlenstofffaser oder Quarzglasfaser, und der Anzahl der Einzelfasern in einer Faser, bspw. 1000 für 1K Faser, in etwa bestimmt werden.

Vorzugsweise ist der Träger als ein einlagiges Gewebe ausgebildet. Das erlaubt u.a. die Herstellung kleiner Wabenzellen bzw. Waben mit geringem Raumgewicht.

In einer Ausführungsform sind die Wabenzellen Hexagonalwaben, insbesondere Hexagonalwaben mit einem freien Durchmesser in der in L/W Ebene von ≤ 50 mm, insbesondere von ≤ 19,2 mm, vorzugsweise ≤ 9,6 mm, besonders bevorzugt ≤ 3,2mm. Unter dem freien Durchmesser wird hier der Abstand in der in L/W Ebene von zwei zueinander parallelen Zellwänden einer Hexagonalwabe verstanden.

Die Erfindung betrifft ferner ein Verfahren zum Herstellen eines Wabenkörpers aus einem Verbundwerkstoff für feuerfeste Leichtbaustrukturen, umfassend einen in eine Matrix eingebetteten Träger, das Verfahren umfassend:
- Bereitstellen eines Trägermaterials, insbesondere eines Gewebes oder Geleges aus Fasern,
- Umformen des Trägermaterials zu einem Träger in einer Wabenform mit Wabenzellen, deren Zellwände aus dem Trägermaterial gebildet sind, insbesondere durch Umformen zu einem Wabenblock im Expansionsverfahren,
- Imprägnieren des Trägers, bspw. durch ein Eintauchverfahren oder dgl., mit einer flüssigen kohlenstoffhaltigen Matrix-Mischung, die organische Bestandteile wie bspw. eine Lösung und/oder eine Suspension eines organischen Polymers oder Polymervorstufen in einem Lösemittel umfassen kann, wobei die Matrix-Mischung erfindungsgemäß dispergierte Siliziumpartikel, d.h. insbesondere metallisches Silizium, umfasst, sodass die Zellwände der Wabenzellen mit der Matrix-Mischung über ihre gesamte Höhe imprägniert werden, zum Bereitstellen eines imprägnierten Waben-Rohlings,
- Erhitzen des imprägnierten Waben-Rohlings auf eine Pyrolysetemperatur von 400-1200°C, und Carbonisieren der kohlenstoffhaltigen Matrix, sodass die organischen Bestandteile der Matrix-Mischung carbonisiert werden und eine poröse Kohlenstoffmatrix entsteht, in der Siliziumpartikel mit eingebunden sind,
- Erhitzen auf eine Silizierungstemperatur, d.h. die Temperatur, bei der das Silizium schmilzt, bspw. bei 1410-1650°C, zum Verflüssigen der Siliziumpartikel und zum Silizieren der carbonisierten Matrix mit der Bildung von Siliziumcarbid (SiC).

Das vorgeschlagene Verfahren ermöglicht die Herstellung von Wabenkörpern bzw. Wabe gemäß einer der weiter oben beschriebenen Ausführungsformen. Das vorgeschlagene Verfahren eignet sich insbesondere zur Herstellung eines Wabenkörpers aus einem carbidkeramischen Verbundwerkstoff mit einem Träger aus Kohlenstoff- und/oder Siliziumcarbidfasern und mit einer Matrix umfassend Siliziumcarbid.

Die Verfahrensschritte werden vorzugsweise in der angegebenen Reihenfolge durchgeführt, wobei zusätzliche Zwischenschritte möglich sind. Insbesondere kann z.B. das Trägermaterial vor dem Umformen in eine Wabenform mit der Matrix-Mischung, die Siliziumpartikel umfasst, imprägniert bzw. vorimprägniert werden. Der Begriff Matrix-Mischung bezeichnet dabei den nicht ausgehärten, insbesondere nicht carbonisierten, Vorläufer der Matrix im Endprodukt.

Das Carbonisieren bzw. die Pyrolyse bewirkt insbesondere eine Zersetzung von organischen Verbindungen bei hohen Temperaturen, bspw. >400°C, zur Bildung von freiem, chemisch ungebundenem Kohlenstoff. Dies kann insbesondere unter atmosphärischem Druck in einer Inertgas-Atmosphäre, bspw. in einem mit Stickstoff begasten Ofen erfolgen. Dabei kann der gesamte organische Kohlenstoff, mit Ausnahme von etwaigen Überresten, in elementaren Kohlenstoff umgewandelt werden.

Während des Silizierens reagiert das flüssige Silizium, wegen Temperaturen über dem Schmelzpunkt, d.h. über ca. 1410°C, geschmolzene Silizium mit dem Kohlenstoff der Matrix zur Bildung von Siliziumcarbid (SiC). Die Reaktion kann insbesondere unter leichtem Vakuum bzw. bei einem verringerten Druck, bspw. bei einem Druck von < 5mbar durchgeführt werden, und/oder in einem mit einem Inertgas begasten Ofen.

Vorteilhaft bei dem erfindungsgemäßen Verfahren ist unter anderem, dass die zuzugebende Menge des Siliziums an die Menge des Kohlenstoffs, die durch Pyrolyse aus der Matrix-Mischung entstehen kann, in der verwendeten Matrix vordefiniert und entsprechend vorbestimmbar bzw. anpassbar ist. Wenn das bei der Matrix-Herstellung zu verwendende organische Polymer beispielsweise das Phenolharz ist, kann das Massenverhältnis von Phenolharz-Vorstufen zu den Siliziumpartikeln in der Matrix-Mischung, je nach Zielanwendung, im Bereich von 1:3 bis 3:1 liegen. Eine Berücksichtigung der Kohlenstoffausbeute des Pyrolyseschrittes für eine konkrete Matrix-Mischung und ausgewählte Pyrolysebedingungen ist dem Fachmann bekannt und/oder experimentell mit bekannten Verfahren bestimmbar.

Es wird insbesondere - im Gegensatz zum Stand der Technik - keine Zugabe von Silizium nach dem Abschluss der Pyrolyse benötigt, da die gewünschte Dosierung von Siliziumpartikeln in der Matrix bereits zu Beginn enthalten ist bzw. eingebracht wird. Dies vereinfacht die Verfahrens- und Anlagentechnik.

Das Dispergieren der Siliziumpartikel in der Matrix-Mischung vor dem Imprägnieren vereinfacht ganz erheblich eine möglichst gleichmäßige Verteilung der Siliziumpartikel, zumindest auch einen Mindestanteil an SiC auch in Richtung der Wabenhöhe, d.h. in T-Richtung, und somit eine möglichst homogene Verteilung des Siliziums in dem imprägnierten Waben-Rohling und im Endprodukt. So kann ohne weiteres ein Massenanteil an SiC in der Matrix des fertigen Wabenkörpers von mindestens 30% und ggf. spürbar höher, insbesondere von mindestens 80 Gew.%, bevorzugt von mindestens 95,5 Gew. %, durchgehend entlang der gesamten Höhe der Zellwände in T-Richtung senkrecht zur L/W-Ebene, d.h. auch in der Mitte des Wabenkörpers, erzielt werden. Die eingangs genannten Nachteile des LSI-Verfahrens werden inhärent vermieden.

Das an sich bekannte Eintauchverfahren zum Imprägnieren der Zellwände der Wabenzellen mit Matrix-Mischung umfasst das Eintauchen des Trägers, der insbesondere in die Form eines Wabenblocks umgeformt wurde, in die Matrix-Mischung und Herausnehmen des Trägers aus der Matrix-Mischung. Eine einstellbare Menge der Matrix-Mischung bleibt am Träger haften, was u.a. durch die Viskosität der Matrix und Entnahmegeschwindigkeit einstellbar ist. Das Imprägnieren durch Eintauchen, das Tauch-Imprägnieren, kann in mehreren Schritten und ggf. auch für Teilbereich des Trägers erfolgen (z.B. jeweils hälftig).

Ein teilbeschichteter Träger kann einer Temperaturbehandlung zum Vorhärten der Matrix-Mischung unterzogen werden, und zwar bei einer Temperatur, bei der die Matrix-Mischung zumindest anhärtet oder vorhärtet, um die Matrix zu stabilisieren. Wenn die Matrix-Mischung Vorstufen für ein duroplastisches Polymer, bzw. ein härtbares, vernetzbares Harz umfasst, kann die Temperaturbehandlung zu einem teilweisen Vernetzen, zum Teilvernetzen bzw. Anretikulieren des Harzes führen. Dabei kann die Matrix-Mischung angehärtet bzw. vorgehärtet werden. Die Matrix-Mischung kann aber auch ausgehärtet werden.

Eintauchen oder Eintauchen und Vorhärten können mehrmals wiederholt werden, insbesondere in drei oder mehr Iterationen, bzw. in mehr als einem Tauchgang durchgeführt werden, sodass der Träger schrittweise bzw. schichtweise mit einer gewünschten Schichtstärke der Matrix-Mischung beschichtet wird. So kann eine faserverstärkte Kohlenstoffstruktur mit einem gewünschten Matrixanteil, d.h. mit einem gewünschten Massenanteil der Matrix an dem Verbundwerkstoff eingestellt werden. Vergleichbare Freiheiten bietet das bekannte LSI-Verfahren nicht.

Es ist jedoch auch möglich, das Eintauchverfahren in nur einem Schritt mit einem einzigen Tauchgang durchzuführen. Der Wabenblock ist beim Eintauchen vorzugsweise so orientiert, dass die Bewegung während des Ein- und Auftauchens senkrecht zu der L/W Ebene, bzw. entlang der T-Richtung verläuft.

Insbesondere bei iterativem Tauch-Imprägnieren kann auch der Schritt des Carbonisierens bzw. der Pyrolyse (oder die beiden Schritte des Carbonisierens und des Silizierens) iterativ erfolgen bzw. in mehreren Durchgängen bzw. Wiederholungen durchgeführt werden, z.B. je nach gewünschter Wandstärke der Wabenzellwände, insbesondere bis zu 10 Mal wiederholt durchgeführt werden, vorzugsweise 2 Mal durchgeführt werden. Unter anderem hierdurch lässt sich insbesondere die SiC-Bildung steuern, die vorzugsweise zu einer möglichst vollständigen Minimierung von freiem Si führen sollte, möglichst ohne Beeinträchtigung der Trägerstruktur. Eine übermäßige Wiederholung sollte jedoch vermieden werden.

Die Erfindung betrifft ferner ein weiteres Verfahren zum Herstellen eines Wabenkörpers aus einem Verbundwerkstoff für feuerfeste Leichtbaustrukturen, umfassend einen in eine Matrix eingebetteten Träger, das Verfahren umfassend:
- Bereitstellen eines Trägermaterials, insbesondere eines Gewebes oder Geleges aus Fasern,
- Umformen des Trägermaterials zu einem Träger in einer Wabenform mit Wabenzellen, deren Zellwände aus dem Trägermaterial gebildet sind, insbesondere Umformen zu einem Wabenblock durch ein Expansionsverfahren,
- Imprägnieren des Trägers mit einer Matrix-Mischung, die zumindest eine siliziumhaltige Polymervorstufe umfasst, insbesondere ein Polycarbosilan, ein Polycarbosiloxan, ein Polysiloxan, ein Polysilazan, ein Polysilan, ein Polycarbosilazan, ein Copolymer mit zwei oder mehr der vorgenannten Verbindungen und/oder eine Mischung mit zwei oder mehr der vorgenannten Verbindungen, sodass die Zellwände der Wabenzellen mit der Matrix-Mischung imprägniert werden, zum Bereitstellen eines entsprechenden Waben-Rohlings,
- Erhitzen des imprägnierten Waben-Rohlings auf eine Pyrolysetemperatur, insbesondere eine Pyrolysetemperatur ≤ 1100°C, vorzugsweise ≤1000°C, besonders bevorzugt von bis zur 900°C, zwecks Bildung einer Matrix, die einen siliziumbasierten Keramikwerkstoff enthält, insbesondere Siliziumcarbid, Siliziumoxycarbid, Siliziumnitrid, Siliziumcarbonitrid und/oder Siliziumborcarbonitrid.

Das vorstehende Verfahren ist insbesondere für Wabenkörper aus glasfaserverstärkten Keramik, bspw. für Luftfahrt, vom Vorteil, da Temperaturen unter der Schmelztemperatur von Glas, bspw. von Quarzglas, zur Keramikherstellung verwenden werden.

Die Matrix-Mischung nach diesem Verfahren enthält die siliziumhaltige Polymervorstufen, sogenannte Prepolymere bzw. prekeramische Polymere, die durch Temperatureinwirkung von über 400°C in siliziumbasierte Keramikwerkstoffe umgewandelt werden können. Die Polymervorstufen stellen somit ein Vormaterial zur Herstellung von Keramik. Insbesondere die Polymervorstufen der Stoffklassen der Polycarbosilane, der Polycarbosiloxane, der Polysiloxane, der Polysilazane, der Polysilane, und der Polycarbosilazane können einzeln oder in Kombinationen in der Matrix-Mischung vorhanden sein, insbesondere auch als Copolymere, d.h. Polymere, die verschiedene der o.g. Vorstufen in ihren Polymerketten umfassen. Die Polymervorstufen der o.g. Stoffklassen können auch als Mischung in der Matrix-Mischung vorliegen.

Polymervorstufen der Stoffklasse der Polycarbosilane umfassen insbesondere HPCs (engl. hyperbranched polycarbosilane), AHPCs (engl. allyl hyperbranched polycarbosilane) und/oder alkoxysubstituierte Polycarosilane.

Polymervorstufen können funktionalisiert sein, bzw. funktionelle Gruppen, bspw. ein-, bi-, und/oder mehrfunktionelle Gruppen, aufweisen. Die funktionellen Gruppen können auf der Polymerkette verteilt und/oder an deren Enden angeordnet sein. Die Gruppen können bspw. hydroxy-, amino-, alkoxy-Gruppen, und/oder bspw. carboxylate, acrylate, isocyanate, epoxyde, ethere, silane, alkoxysilane, trimethoxysilane und/oder vinyle sein. Polymervorstufen können eine Kombination mit verschiedenen der o.g. Gruppen aufweisen.

Das vorgeschlagene Verfahren ermöglicht die Herstellung von Wabenkörpern bzw. Wabe gemäß einer der weiter oben beschriebenen Ausführungsformen. Das vorgeschlagene Verfahren eignet sich insbesondere zur Herstellung eines Wabenkörpers aus einem Verbundwerkstoff mit einem Träger aus Quarzglasfasern und mit einer Matrix umfassend einen siliziumbasierten Keramikwerkstoff, ausgewählt aus der Gruppe bestehend aus Siliziumcarbid, Siliziumoxycarbid, Siliziumnitrid, Siliziumcarbonitrid und Siliziumborcarbonitrid. Das Verfahren ist besonders vorteilhaft für die Herstellung von Wabenkörpern zum Verwenden als Kern zur Herstellung einer hitzebeständigen Leichtbau-Sandwichstrukturen für Luftfahrt.

Die Verfahrensschritte werden vorzugsweise in der angegebenen Reihenfolge durchgeführt, wobei zusätzliche Zwischenschritte möglich sind. Insbesondere kann z.B. das Trägermaterial vor dem Umformen in eine Wabenform mit der Matrix-Mischung imprägniert bzw. vorimprägniert werden. Der Begriff Matrix-Mischung bezeichnet dabei den nicht ausgehärten, insbesondere nicht carbonisierten, Vorläufer der Matrix im Endprodukt.

Das Imprägnieren kann insbesondere im o.g. Tauchverfahren durchgeführt werden und kann wiederholt durchgeführt werden, um ein gewünschtes Raumgewicht des Waben-Rohlings einzustellen.

Das Trägermaterial kann insbesondere in Form eines offenporigen luftdurchlässigen Fasergebildes hergestellt sein, und vorzugsweise Glasfasern, bevorzugt Silikat-Glasfasern, besonders bevorzugt Quarzglasfasern umfassen.

In einer Ausführungsform umfasst die Matrix-Mischung Polyborazylen. Dies ermöglicht die Herstellung von Siliziumborcarbonitrid-enthaltenden Matrix.

Das Trägermaterial wird vorzugsweise in Form eines offenporigen luftdurchlässigen Fasergebildes bereitgestellt und umfasst insbesondere Kohlenstofffasern und/oder Keramikfasern. Der Begriff "offenporig" bedeutet, dass das Fasergebilde durchlässig für gasförmiges oder flüssiges Medium ist. Unter Poren werden allgemein Hohlräume in einem Material verstanden, insbesondere Hohlräume, deren Durchmesser in einem etwa 1 bis 1000 Mikrometer-Bereich liegen. Unter den Poren in dem Fasergebilde sind hier Hohlräume zwischen einzelnen Fasern oder Fasern-Bündel gemeint. Eine gewisse Porosität vor dem Tränken mit Matrix ist für eine gute Durchtränkung vorteilhaft.

Der Träger weist also vorzugsweise vor dem Imprägnieren eine Luftdurchlässigkeit auf, um die Tränkung mit dem Matrixmaterial zu fördern, insbesondere eine Luftdurchlässigkeit von mindestens 10 l/dm²/min nach DIN EN ISO 9237.

Das Trägermaterial ist zumindest vor dem Umformen vorzugsweise einlagig.

Das Flächengewicht des Trägermaterials (ohne Matrix) kann zwischen 25 g/m² und 1000 g/m², bevorzugt zwischen 50 g/m² und 400 g/m² betragen. Bei einem geringen Flächengewicht des Trägers ist es möglich, kleinere Wabenzellen und/oder Waben mit geringem Raumgewicht herzustellen.

Das Trägermaterial kann ein Gewebe umfassen, insbesondere ein Gewebe mit Leinwandbindung, vorzugsweise mit einer Porosität von 2 Vol.-% bis 40 Vol.-%, besonders bevorzugt von 20 Vol.-% bis 30 Vol.-%, wobei die Porosität einen Volumenanteil der Poren an dem Trägermaterial bedeutet, und/oder mit einer Maschenweite von 100 bis 800 µm, vorzugsweise 200 bis 500 µm. Die anfängliche Porosität und/oder die Maschenweite kann natürlich durch Vorimprägnieren des Trägermaterials bereits vor dem Umformen verändert werden.

Die Porosität des Werkstoffes nach dem Carbonisieren und dem Silizieren bzw. nach der Pyrolyse kann, je nach Beschichtungsgrad, 0 Vol.-% bis 30 Vol.-% betragen. Die Porosität kann z.B. im Röntgen- oder Ultraschallverfahren geprüft werden.

Die in der Matrix-Mischung dispergierten Siliziumpartikel können eine Korngrößenverteilung von 0,001 bis 1 mm, vorzugsweise von 0,008 bis 0,09 mm, aufweisen. Der Vorteil möglichst kleiner Partikel liegt darin, dass sie sich besser im Träger verteilen können.

Das vorzugsweise einzusetzende Siliziumpulver kann einen Reinheitsgrad von 75 bis 99,99% aufweisen.

Der Massenanteil der Siliziumpartikel in der Matrix-Mischung vor dem Aushärten beträgt vorzugsweise 20 Gew.-% bis 60 Gew.-%, vorzugsweise 25 Gew.-% bis 45 Gew.-%.

Bei einer Ausführungsform des Verfahrens umfasst die Matrix-Mischung mindestens eine Vorstufe für ein duroplastisches Polymer. Die Vorstufe für ein duroplastisches Polymer kann mittels Lösemittel gelöst in der Matrix-Mischung vorliegen. Bspw. kann es sich um Phenolharz-Vorstufen gelöst in z.B. Isopropanol handeln. Weitere Harzsysteme, die zur Matrix-Mischung zugegeben werden können, umfassen Epoxy-, Polyimide-, Cyanatester-, und/oder Polyester-Harz.

Viskosität der Matrix-Mischung kann durch Zugabe von Lösemittel eingestellt werden, die für das entsprechende Harzsystem geeignet sind, um die Benetzbarkeit währen des Imprägnierens zu verbessern. Dies gilt sowohl für das Verfahren mit einer Si-Partikelenthaltender Matrix-Mischung als auch für das Verfahren mit einer Matrix-Mischung, die Polymervorstufen als Keramik-Precursor enthält.

Bei einer Ausführungsform des Verfahrens kann die Matrix-Mischung metall-organische Verbindungen, Metalloxide und/oder elementare Metalle, bevorzugt Titan- bzw. Aluminiumverbindungen, umfassen.

Bei einer Ausführungsform des Verfahrens wird nach dem Imprägnieren ein An- oder Aushärtungsschritt durchgeführt, um die Matrix-Mischung vorzuhärten, wobei der mit der Matrix-Mischung imprägnierte Waben-Rohling unter Wärmeeinwirkung zumindest vorgehärtet wird. Dieser Schritt kann insbesondere für Waben-Rohlinge, die mit Vorstufen eines duroplastischen Polymers imprägniert sind, durchgeführt werden. In einer weiteren Ausführungsform kann der Waben-Rohling ein thermoplastisches Polymer umfassen. Das Vorhärten ist vorteilhaft für eine bessere Fixierung der Matrix-Mischung an dem Träger.

Der Träger in Form eines Wabenblocks kann insbesondere durch ein Expansionsverfahren hergestellt werden, das folgende Schritte umfasst:
- Bereitstellen Trägermaterials, z.B. in flächiger, blatt- oder folienartiger Form oder dgl., insbesondere in Form einer Rolle,
- Anbringen von parallelen Streifen eines Klebers, welche sich in der T-Richtung bzw. in der Richtung der Breite der Rolle über die Breite der Rolle erstrecken, insbesondere über die gesamte Breite der Rolle, und in regelmäßigen insbesondere gleichmäßigen Abständen in der L-Richtung bzw. der Längsrichtung der Rolle, d.h. in der Abrollrichtung der Rolle, senkrecht zu der T-Richtung voneinander beabstandet sind,
- Zuschneiden der Rolle zu Bögen, vorzugsweise gleichformatigen Bögen,
- Auflegen der Bögen zu einem Stapel aufeinander,
- An- oder Aushärten des Klebers, bspw. unter Druck und/oder Temperatureinwirkung, sodass der Stapel zu einem zusammenhängenden stapelartigen Block verarbeitet wird, und
- Expansion des so verbundenen Stapels bzw. Blocks in W-Richtung, d.h. in Richtung der Stapelhöhe, sodass ein Wabenblock mit Wabenzellen entsteht.

Die Größe und die Form der Wabenzellen sind durch die Dimensionierung und Anordnung der Streifen des Klebers auf den verschiedenen Bögen und durch Anordnung der Bögen relativ zu einander in weiten Bereichen einstellbar. Wabenkörper mit Wabenzellen mit verschiedensten Geometrien und Größen liegen im Rahmen der Erfindung, wie bspw. Wabenkörper mit im Querschnitt polygonalen Wabenzellen, insbesondere technisch hexagonalen oder rechteckigen Wabenzellen, oder mit anderen Formen z.B. auch sektkelchartigen Wabenzellen.Die Matrix-Mischung kann dispergierte Additive wie bspw. Bornitrid, Siliziumcarbid, Petrolkoks, Glas, oder Carbon-Nanotubes umfassen, zum Erreichen von Oxidationseigenschaften, die für Hochtemperaturanwendungen geeignet sind, und/oder zum Erzielen einer möglichst verschlossenen Oberfläche, bspw. zum Herstellen von Spiegel. Die Matrix-Mischung kann alternativ oder ergänzend auch dispergierte Additive wie bspw. Kurzfasern, Carbon-Nanotubes und Nanopartikel umfassen, die zum Verbessern der Fließeigenschaften der Matrix-Mischung, der mechanischen Eigenschaften der Matrix und/oder der Anbindung zwischen der Matrix und dem Träger dienen. Die Matrix-Mischung kann ferner dispergierte Additive wie bspw. Carbon-Nanotubes und Nanopartikel umfassen, die zum Herstellen von Verbundmaterialien mit dielektrischen Eigenschaften geeignet sind. So können z.B. radardurchlässige Bauteile hergestellt werden.

Wenn das Imprägnieren in mehr als einem Tauchgang durchgeführt wird, können Additive vorzugsweise nur für den letzten Tauchgang der Matrixmischung beigefügt werden.

Die Matrix-Mischung kann Dispergierungsmittel umfassen, insbesondere um einer Agglomeration von Siliziumpartikeln entgegenzuwirken. Als Dispergierungsmittel kommen insbesondere (Poly)Phosphate, Sulfone, Carboxylate, Polyelektrolyte, als auch Tenside in Betracht.

Die Matrix-Mischung kann einen Massenanteil kohlenstoffreicher Nanopartikel und/oder Carbon-Nanotubes von 0,1 Gew.-% bis 20 Gew.- % umfassen, für einen Kohlenstoffüberschuss in der Matrix.

Die Matrix-Mischung kann weitere Komponenten umfassen, bspw. einen Härter für Duroplaste.

Bei einer Ausführungsform des Verfahrens wird vor oder nach der Pyrolyse bzw. nach dem Silizieren ein Zuschneiden des Wabenblocks in Scheiben quer zu den Zellwänden der Wabenzellen, insbesondere senkrecht zu der T-Richtung, durchgeführt, zum Herstellen von Wabenkörpern in gewünschter Höhe. Dadurch werden gleiche Wabenkörper bzw. Wabenscheiben hergestellt, die gleiche Querschnitt der Wabenzellen senkrecht zu der T-Richtung aufweisen.

Ferner betrifft die Erfindung gemäß einem weiteren Aspekt eine Verwendung eines Wabenkörpers als Kern zur Herstellung einer hitzebeständigen, insbesondere feuerfesten Leichtbau-Sandwichstruktur, wobei der Kern mit zwei Deckschichten aus einem keramischen Faserverbundwerkstoff verbunden wird. Der Wabenkörper kann in Form einer Wabenscheibe vorliegen, die von einem blockartigen Wabenkörper senkrecht zu der T-Richtung zugeschnitten wurde. Jede Deckschicht bzw. Deckhaut kann in Form vom flachen ein- oder mehrschichtigem Laminat hergestellt sein.

Das Laminat kann insbesondere durch folgende Schritte hergestellt werden: Beschichten eines Trägermaterials, insbesondere eines Gewebes oder Geleges aus Fasern, vorzugsweise aus C-Fasern und/oder SiC-Fasern, mit einer härtbaren Matrix-Mischung, welche eine Lösung und/oder eine Suspension eines organischen Vorpolymers oder Polymervorstufen, insbesondere eines Reaktionsharzes oder aber eines Kondensationsharzes, in einem Lösemittel und dispergierte Siliziumpartikel umfasst, Zuschneiden des Trägermaterials in Bögen, ggf. Aufstapeln und Verpressen der Bögen, Pyrolyse und Silizieren. Das silizierte Laminat kann ggf. in die Silizium-haltige Matrixmischung eingetaucht und erneut pyrolysiert und siliziert werden. Diese Schritte können wiederholt werden. Der Faservolumenanteil in dem Laminat kann 15°Vol.-% bis 75°Vol.-% betragen und der Massenanteil der Matrix im Laminat kann 20 Gew.-% bis 80 Gew.-% betragen.

Das Laminat kann alternativ durch folgende Schritte hergestellt werden: Beschichten eines Trägermaterials, insbesondere eines Gewebes oder Geleges aus Fasern, vorzugsweise aus QuarzglasFasern, mit einer härtbaren Matrix-Mischung, welche eine Lösung und/oder eine Suspension einer oder mehrerer Si-haltiger prekeramischer Polymervorstufen, insbesondere eines Reaktionsharzes oder aber eines Kondensationsharzes, Zuschneiden des Trägermaterials in Bögen, ggf. Aufstapeln und Verpressen der Bögen und Pyrolyse. Die Schritte des Beschichtens und der Pyrolyse können wiederholt werden.

Die Matrix-Mischung zum Herstellen der Deckschichten kann die gleiche sein, die zum Herstellen des Wabenkerns benutzt wird. Es können aber auch unterschiedliche Matrix-Mischungen zum Herstellen von Deckschichten und von dem Wabenkern eingesetzt werden.

In der Leichtbau-Sandwichstruktur kann der Wabenkörper bzw. die Wabenscheibe zwischen den Deckschichten insbesondere so angeordnet werden, sodass die Zellwände der Waben quer, insbesondere senkrecht zu den Deckschichten positioniert sind.

Das Verbinden des Wabenkerns mit den Deckschichten kann durch ein Aufbringen der Matrix-Mischung, in der Siliziumpartikel dispergiert sind, als Klebeschicht zwischen der jeweiligen Deckschicht und der Wabe, ein Erhitzen bei der Pyrolysetemperatur zum Carbonisieren der Klebeschicht und ein anschließendes Erhitzen bei der Silizierungstemperatur zur Bildung von SiC in der Kleberschicht durchgeführt werden.

Die Matrix-Mischung zum Verbinden des Wabenkerns mit den Deckschichten kann die gleiche sein, die zum Herstellen des Wabenkerns benutzt wird, bspw. Matrix-Mischung, die prekeramische Polymervorstufen umfasst. Die Sandwichstruktur kann abschließend der Eiwirkung einer Pyrolysetemperatur unterzogen werden.

Alternativ oder ergänzend kann mindestens eine Prepreg-Schicht umfassend ein Trägermaterial imprägniert mit einer härtbaren Matrix-Mischung, die dispergierte Siliziumpartikel umfasst, als Klebeschicht zwischen der jeweiligen Deckschicht und der Wabe dienen.

Die Matrix-Mischung, insbesondere in der Prepreg-Schicht, für die Klebeverbindung kann teilvernetzt bzw. angehärtet sein, sodass sie zumindest zähflüssig und klebend, und bei einem Erwärmen leicht fließend ist, sodass sie einen Harz-Meniskus mit den Wabenstegen formen kann, aber nicht entlang der Wabenstege fließen. Die Matrix-Mischung, insbesondere der Prepreg-Schicht, kann sich vorzugsweise in dem sog. B-Zustand (engl. B-stage) befinden, was einem mittleren Vorreaktionsgrad des Harzes entspricht, wobei das Harz teilvernetzt, pastös ist und noch schmelzbar und härtbar ist. Die Sandwichstruktur aus den Deckschichten, der Klebeschichten und des Wabenkerns kann anschließend einem Erhitzen bei der Pyrolysetemperatur zum Carbonisieren der Klebeschicht und einem Erhitzen bei der Silizierungstemperatur zur Bildung von SiC in der Kleberschicht unterzogen werden.

Das Verbinden der Schichten der Sandwichstruktur, insbesondere des Kerns mit den Deckschichten, kann nach dem Silizieren des Wabenkörpers und nach dem Silizieren der Deckschichten stattfinden. Es ist jedoch auch möglich, dass noch nicht oder nicht vollständig carbonisierte bzw. noch nicht oder nicht vollständig silizierte Schichten zu einer Sandwichstruktur zusammengefügt werden und als Sandwichstruktur weiterverarbeitet werden, d.h. nach dem Verbinden zu einer Sandwichstruktur carbonisiert und siliziert werden. Es ist somit auch möglich, die Schichten, die sich bei dem Zusammenfügen an den verschiedenen Verarbeitungsstufen befinden, zu einer Sandwichstruktur zusammenzufügen und anschließend die Verarbeitung an der gesamten Sandwichstruktur zu vervollständigen.

Leichtbau-Sandwichstrukturen, die wie oben beschrieben hergestellt sind, eignen sich insbesondere für Raumfahrt- und LuftfahrtAnwendungen, z.B. zum Herstellen von Schutzverkleidungen für Triebwerke im Verdichtungs-, Verbrennungs- und Abgasbereich, zum Herstellen von Hitzeschildern, z.B. bei thermischer Bodenschutzverkleidung für Raumfähren, für Auslassdüsen für Raketen, usw.

Ferner betrifft die Erfindung gemäß einem weiteren unabhängigen Aspekt einen Waben-Rohling, der als Zwischenprodukt besonders zum Herstellen eines Wabenkörpers aus faserverstärkter Carbidkeramik für feuerfeste Leichtbaustrukturen geeignet ist.

Der Waben-Rohling umfasst Wabenzellen mit einem Querschnitt in L/W Ebene, insbesondere einem polygonalen, z.B. näherungsweise hexagonalen Querschnitt, wobei Zellwände der Wabenzellen aus einem Trägermaterial hergestellt sind, insbesondere aus einem Gewebe oder Gelege aus Fasern, das mit einer kohlenstoffhaltigen Matrix-Mischung imprägniert ist, die erfindungsgemäß dispergierte Siliziumpartikel umfasst, wobei der Massenanteil der Siliziumpartikel in der Matrix-Mischung im mittleren Bereich der Höhe der Zellwände entlang einer T-Richtung senkrecht zu der L/W Ebene um weniger als 20 Gew.-%, insbesondere weniger als 10 Gew.- %, vorzugsweise um weniger als 1 Gew.-% vom Massenanteil der Siliziumpartikel in der Matrix-Mischung in den endseitigen Bereichen der Höhe der Zellwände abweicht.

Der Waben-Rohling ist ein Zwischenprodukt, insbesondere nach dem erfindungsgemäßen Verfahren, das die geometrische Form und die Abmessungen des erfindungsgemäßen Wabenkörpers bzw. Wabenblocks im Wesentlichen bereits aufweist (von prozessbedingten Schrumpfeffekten abgesehen). Diese geometrische Form wird durch die Pyrolyse und das Silizieren nur geringfügig verändert, wobei sich die Veränderung experimentell oder analytisch berücksichtigen lässt. Die anschließend vorgesehenen Schritte der Pyrolyse und des Silizierens verändern jedoch die chemische Zusammensetzung des Waben-Rohlings: die Matrix wird carbonisiert, und der Kohlenstoff wird zumindest zum Teil in SiC umgewandelt, sodass ein keramischer Verbundwerkstoff erzeugt wird.

Die Matrix-Mischung, mit der die Zellwände der Wabenzellen imprägniert sind, kann einen Massenanteil der Siliziumpartikel von 20 Gew.-% bis 60 Gew.-%, vorzugsweise 25 Gew.-% bis 45 Gew.-% aufweisen.

Die Matrix-Mischung kann mindestens eine Vorstufe für ein duroplastisches Polymer, insbesondere Phenolharz, umfassen.

Die Siliziumpartikel weisen vorzugsweise eine Korngrößenverteilung von 0,001 bis 1 mm, besonders bevorzugt von 0,008 bis 0,09 mm auf.

Der Waben-Rohling kann zum Herstellen von Sandwischstrukturen eingesetzt werden, bzw. zwischen zwei Deckschichten angeordnet werden und mit den Deckschichten verbunden werden. Das Carbonisieren und Silizieren kann an der verbundenen Sandwichstruktur durchgeführt werden, was die Prozesskosten reduziert. Die Matrix-Mischung, mit der die Zellwände des Waben-Rohlings imprägniert sind, kann dabei teilvernetzt sein, bzw. nicht ausgehärtet, sondern angehärtet sein, sodass sie bei einer Temperaturerhöhung noch schmelzbar ist und eine Verbindung mit den Deckschichten eingehen kann. Ein Auftragen einer Zusätzlichen Kleberschicht kann so vermieden werden.

Ferner betrifft die Erfindung gemäß einem weiteren unabhängigen Aspekt einen Waben-Rohling, der als Zwischenprodukt besonders zum Herstellen eines Wabenkörpers aus faserverstärkter siliziumbasierter Keramik für feuerfeste Leichtbaustrukturen geeignet ist.

Der Waben-Rohling umfasst Wabenzellen mit einem Querschnitt in L/W Ebene, insbesondere einem polygonalen, z.B. näherungsweise hexagonalen Querschnitt, wobei Zellwände der Wabenzellen aus einem Trägermaterial hergestellt sind, insbesondere aus einem Gewebe oder Gelege aus Fasern, vorzugsweise aus Quarzglasfasern, das mit einer Matrix-Mischung imprägniert ist, die erfindungsgemäß zumindest eine siliziumhaltige Polymervorstufe umfasst, insbesondere ein Polycarbosilan, ein Polycarbosiloxan, ein Polysiloxan, ein Polysilazan, ein Polysilan, ein Polycarbosilazan, ein Copolymer mit zwei oder mehr der vorgenannten Verbindungen und/oder eine Mischung mit zwei oder mehr der vorgenannten Verbindungen.

Der Waben-Rohling ist ein Zwischenprodukt, insbesondere nach dem erfindungsgemäßen Verfahren, das die geometrische Form und die Abmessungen des erfindungsgemäßen Wabenkörpers bzw. Wabenblocks im Wesentlichen bereits aufweist (von prozessbedingten Schrumpfeffekten abgesehen). Diese geometrische Form wird durch die Pyrolyse nur geringfügig verändert, wobei sich die Veränderung experimentell oder analytisch berücksichtigen lässt. Die anschließend vorgesehenen Schritte der Pyrolyse verändern jedoch die chemische Zusammensetzung des Waben-Rohlings: die Matrix wird carbonisiert, und die pre-keramischen Prepolymere bzw. die Polymervorstufen werden zumindest zum Teil in entsprechende siliziumbasierte Keramikwerkstoffe umgewandelt, bspw. in Siliziumcarbid, Siliziumoxycarbid, Siliziumnitrid, Siliziumcarbonitrid und/oder Siliziumborcarbonitrid, sodass ein keramischer Verbundwerkstoff erzeugt wird.

Die Erfindung betrifft gemäß einem unabhängigen Aspekt ferner ein flächiges Halbzeug, insbesondere ein sogenanntes Prepreg, als härtbares Zwischenprodukt zum Herstellen von feuerfesten Faserverbund-Leichtbaustrukturen, insbesondere von Laminaten wie z.B. Deckschichten für feuerfeste Leichtbau-Sandwichstrukturen. Das vorgeschlagene Halbzeug hat ein Trägermaterial, das mit einer kohlenstoffhaltigen Matrix-Mischung imprägniert ist, wobei das Trägermaterial ein Gewebe oder Gelege aus Fasern, insbesondere Kohlenstofffasern und/oder Keramikfasern umfasst und wobei die härtbare Matrix-Mischung mindestens eine Vorstufe für ein duroplastisches Polymer, insbesondere Phenolharz, umfasst.

Gemäß einem Aspekt der Erfindung weist die Matrix-Mischung dispergierte Siliziumpartikel auf.

Die Matrix-Mischung weist vorzugsweise einen Massenanteil der Siliziumpartikel von 20 Gew.-% bis 60 Gew.-%, besonders bevorzugt 25 Gew.-% bis 45 Gew.-% auf.

Die Siliziumpartikel können eine Korngrößenverteilung von 0,001 bis 1 mm, insbesondere vom 0,008 bis 0,09 mm aufweisen.

Gemäß einem Aspekt der Erfindung weist die Matrix-Mischung zumindest eine siliziumhaltige Polymervorstufe, insbesondere ein Polycarbosilan, ein Polycarbosiloxan, ein Polysiloxan, ein Polysilazan, ein Polysilan, ein Polycarbosilazan, ein Copolymer mit zwei oder mehr der vorgenannten Verbindungen und/oder eine Mischung mit zwei oder mehr der vorgenannten Verbindungen auf.

Wie für das oben vorgeschlagene Verfahren umfasst die Matrix-Mischung im Halbzeug weiterhin insbesondere mindestens eine Substanz, die zu einem Polymer vernetzt werden kann. Die Vorstufe(n) kann/können teilvernetzt sein. Die Fasern können C-Fasern und/oder SiC-Fasern sein. Die Matrix-Mischung kann eine Lösung und/oder eine Suspension eines organischen Vorpolymers oder Polymervorstufen, insbesondere eines Reaktionsharzes oder eines Kondensationsharzes in einem Lösemittel sein. Diese härtbare Harzzusammensetzung kann weitere Komponenten, z.B. einen Härter, umfassen. Härtbar bedeutet vorliegend, dass die Matrix-Mischung technisch noch nicht ausgehärtet ist, die härtbare Matrix-Mischung kann ggf. jedoch teilvernetzt bzw. anretikuliert sein. Die Matrix-Mischung soll insbesondere noch schmelzbar sein. Die Matrix-Mischung in dem flächigen Halbzeug bzw. Prepreg kann sich im sog. B-Zustand (engl. B-stage) befinden, d.h. in einem teilvernetzten, teil- bzw. angelierten Zustand.

Die Prepregs können eine Klebrigkeit von Tack 0 bis Tack 2 aufweisen, insbesondere Tack 0 oder Tack 1. Die Matrix-Mischung kann dabei bei Raumtemperatur (20°C) fest oder pastös sein, kann aber durch eine Temperaturerhöhung verflüssigt werden. Die Matrix-Mischung in dem Prepreg, das zum Laminat verpresst werden soll, kann sich jedoch in fortgeschrittenem B-Zustand, bzw. in einem stark vorreagierten Zustand befinden. Die Matrix-Mischung kann z.B. durch Temperaturbehandlung ausgehärtet werden, d.h. vom B-Zustand in einen C-Zustand überführt werden, in dem das Harz polymerisiert, ausgehärtet d.h. vernetzt ist und nicht mehr schmelzbar ist und nicht weiter härtbar ist.

Das Prepreg kann somit zum Herstellen von Laminaten unterschiedlichster Formgebung eingesetzt werden. Es können z.B. mehrere Prepreg-Schichten bzw. Bögen aus Prepreg aufgestapelt und verpresst werden, insbesondere unter Einwirkung einer Temperatur, die für das Aushärten des Harzes bzw. Vernetzen der Polymervorstufen mit Bildung eines vernetzten duroplastischen Polymers ausreichend ist.

Das Prepreg kann auch als Klebeschicht zum Verbinden von einem Wabenkern mit Deckschichten zu einer Sandwichstruktur verwendet werden.

Neben Gewebe kommen auch Gelege als Trägermaterial in Betracht. Gelege bedeutet vorliegend ein Flächengebilde, das aus einer oder mehreren Lagen von nicht-gewebten und/oder unidirektional angeordneten, insbesondere parallel verlaufenden, Fasern besteht. Ein Gelege umfasst z.B. auch ein UD-Tape aus Rovings.

Der Massenanteil der Fasern in dem Prepreg liegt vorzugsweise zwischen 20 Gew.-% und 80 Gew.-%, insbesondere zwischen 20 Gew.-% und 45 Gew.-%. Das soll in einem ausreichend hohen Matrix-Massenanteil, z.B. 20 bis 60 Gew.-% Matrix in der fertigen Deckschicht, d.h. nach dem Laminieren, Pyrolyse und ggf. Silizieren, resultieren. Der Faservolumenanteil in dem Laminat kann 15°Vol.-% bis 75°Vol.-% betragen.

Weitere Einzelheiten, Merkmale und Vorteile der Erfindung sind der nachfolgenden, ausführlicheren Beschreibung bevorzugter Ausführungsbeispiele anhand der beiliegenden Figuren zu entnehmen. Diese zeigen:
- **FIG. 1:**: ein Ausführungsbeispiel eines erfindungsgemäßen Wabenkörpers in einer perspektivischen Prinzipansicht;
- **FIG. 2:**: einen schematisierten Prozessablauf mit Piktogrammen eines Herstellungsverfahrens eines bevorzugten Ausführungsbeispiels des erfindungsgemäßen Wabenkörpers;
- **FIG. 3:**: einen schematisierten Prozessablauf als Blockdiagramm zu einem Ausführungsbeispiel für ein Herstellverfahren eines faserverstärkten, carbidkeramischen Sandwichbauteils umfassend einen Wabenkern; und
- **FIG. 4:**: eine Teilansicht eines Ausführungsbeispiels einer Leichtbau-Sandwichstruktur hergestellt gemäß der Erfindung, im Querschnitt senkrecht zur L/W-Ebene.

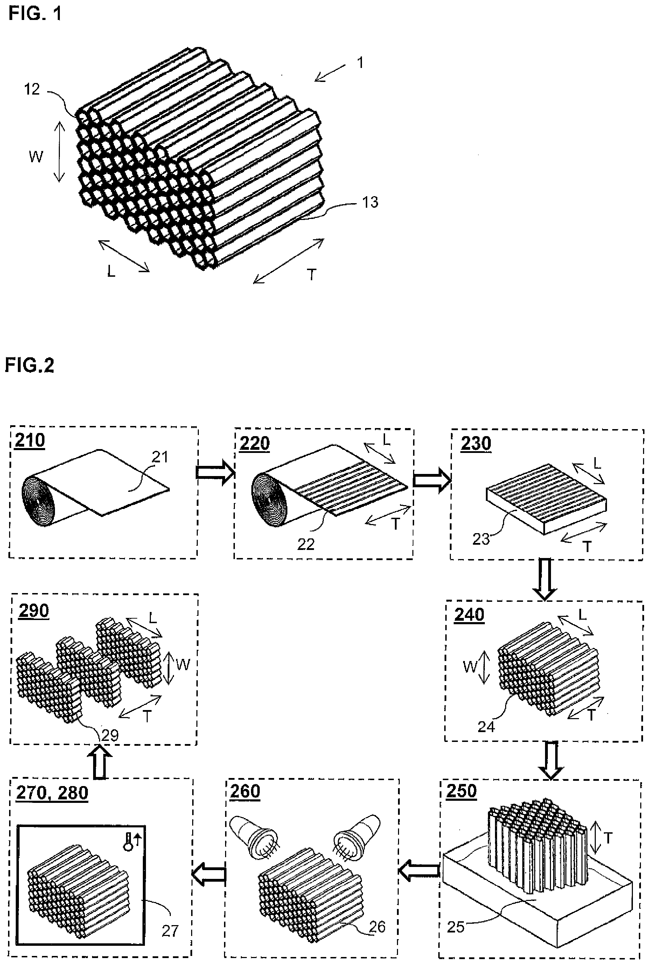

**FIG. 1** zeigt einen blockartigen Wabenkörper 1 mit Wabenzellen 12 und deren Zellwänden 13. Die L-Richtung (Längsrichtung), die W-Richtung (Querrichtung) und die T-Richtung sind durch Doppelpfeile angegeben. Die T-Richtung entspricht der Wabenhöhe bzw. Wabenstärke bzw. der Höhe der Zellwände 13. Bei diesem Ausführungsbeispiel sind die Wabenzellen 12 technisch hexagonal, d.h. sie bilden im Grundriss eine hexagonale Form im Querschnitt in der L/W-Ebene. Die Wabenzellen 12 sind hier nicht maßstabgerecht dargestellt. Der Wabenkörper 1 ist so dargestellt, wie er nach dem Silizieren vorliegt. Der Wabenkörper 1 kann ggf. anschließend in flache Wabenscheiben 29 (**FIG.2**) quer zur T-Richtung zugeschnitten werden.

**FIG. 2** zeigt ein Prozessschema nach einem Ausführungsbeispiel des erfindungsgemäßen Herstellverfahrens für einen Wabenkörper 1, der aus dem kohlenstofffaser-verstärktem SiC aufgebaut ist. Es werden hier nur die wesentlichen Schritte dargestellt und beschrieben.

### Ausführungsbeispiel 1:

Im Schritt **210** wird eine Rolle mit einem Trägermaterial 21 bereitgestellt. Als Trägermaterial 21 wird bei diesem Beispiel das Kohlenstofffaser-Gewebe Tenax^{®} HTA40 200 tex (3K) Style 450-5 Aero eingesetzt. Das Gewebe des Trägermaterials 21 ist nach einer Leinwand-Webart hergestellt. Im Schritt **220** werden zueinander parallele Streifen 22 eines Klebers auf das abgerollte Trägermaterial 21 senkrecht zur L-Richtung bzw. der Abrollrichtung, z.B. in gleichbleibenden Abständen angebracht. Als Kleber wird bei diesem Beispiel ein Kleber auf Epoxy-Phenolbasis verwendet. Die Streifen 22 werden über die gesamte Breite des Trägermaterials 21 angebracht. Im Schritt **230** wird das Trägermaterial 21 in Bögen mit identischem Format zugeschnitten, die Bögen werden relativ zueinander in L-Richtung versetzt, z.B. um den halben Abstand der Kleber-Streifen 22, aufeinander zu einem Stapel 23 abgelegt. Der Stapel 23 wird durch An-oder Aushärten der Kleber-Streifen 22 unter Druck- und Temperatureinwirkung in einer Presse gemäß einem an sich bekannten Prozess zu einem zusammenhängenden Block verarbeitet. Im Schritt **240** erfolgt in an sich bekannter Weise die Expansion in W-Richtung so, dass ein Wabenblock 24 mit technisch hexagonalen Wabenzellen entsteht, d.h. mit Wabenzellen, die einen hexagonalen Querschnitt in der L/W Ebene aufweisen. Die Zellgröße der Wabenzellen (vgl. **FIG.1**) in der L/W Ebene beträgt z.B. 9,6mm. Die Höhe des Wabenblocks 24 in der T-Richtung entspricht der Breite der Rolle des Trägermaterials 21, und bemisst bspw. 400-500 mm oder ggf. größer, wie z.B. 1000 mm. Die Breite des Wabenblocks 24 in der W-Richtung wird durch den Expansionsschritt bestimmt, und bemisst bspw. 700-900 mm und kann bei weiteren Ausführungsformen auch wesentlich größer sein, z.B. 2440 mm. Die Länge des Wabenblocks 24 in der L-Richtung bemisst bspw. 400-600 mm und kann bei weiteren Ausführungsformen auch wesentlich länger sein, z.B. 1220 mm. Der Wabenblock 24 hat vor der Weiterbehandlung z.B. ein Raumgewicht von ca. 50-60 kg/m³.

Im Schritt **250** wird der Wabenblock 24 mit einer Matrix-Mischung 25 getränkt bzw. imprägniert, in diesem Ausführungsbeispiel durch vollständiges Eintauchen des Wabenblocks 24 in ein Behältnis, in dem die Matrix-Mischung 25 als Bad in ausreichender Höhe relativ zur Höhe des Wabenblocks 24 vorbereitet ist. Andere Imprägniertechniken sind ebenfalls möglich. Der Wabenblock 24 bildet somit den Träger für die durch Imprägnieren applizierte Matrix. Die Matrix-Mischung 25 umfasst in diesem Beispiel z.B. Phenolharz-Vorstufen gelöst in Isopropanol. Als Phenolharz kann z.B. Bakelite^{®} PF 1145, oder Bakelite^{®} PF 0247 DW 01, oder auch Bakelite^{®} PF 6983 FW 01 von Hexion GmbH/Deutschland, eingesetzt werden. Die Matrix-Mischung 25 umfasst ferner dispergierte Siliziumpartikel aus metallischem Silizium (Si) mit einer ausgewählten Korngrößenverteilung, z.B. im Bereich von 0,008 bis 0,09 mm. Die Matrix-Mischung 25 wird gerührt, sodass die Partikel dispergiert sind. Ein kontinuierliches Rühren besonders bei kleinen Partikelgrößen ist jedoch nicht notwendig. Die Massenanteile der Phenolharz-Vorstufen und des Siliziums in der Matrix-Mischung 25 betragen in diesem Ausführungsbeispiel jeweils 33 Gew.-%. Der Massenanteil des Isopropanols in der Matrix-Mischung 25 beträgt in diesem Ausführungsbeispiel 30 Gew.-%. Ferner umfasst die Matrix-Mischung 4 Gew.-% Kohlenstoff-Nanopartikel in diesem Ausführungsbeispiel.

Als Ergebnis des Imprägnierens entsteht ein mit siliziumhaltiger Matrix-Mischung imprägnierter Waben-Rohling 26. Im Schritt **260** wird der imprägnierte Waben-Rohling 26 bei einer Temperatur von 200-300°C vorgehärtet, u.a. um das Lösemittel, hier Isopropanol, zu verdampfen. Dabei wird die Matrix-Mischung zumindest teilweise vernetzt. Die Matrix-Mischung kann auch vollständig vernetzt werden, sodass sie nicht mehr schmelzen kann.

Im Schritt **270** wird der vorgehärtete Waben-Rohling 26 in einem mit Stickstoff begasten Pyrolyseofen 27 auf die Pyrolysetemperatur, 950-1000°C, bei einem atmosphärischen Druck für ca. 6-8 Stunden erhitzt, sodass die organischen Bestandteile der Matrix-Mischung carbonisieren und ein Zwischenprodukt entsteht. Dieses weitere Zwischenprodukt hat einen Träger aus Kohlenstofffasern eingebettet in eine Kohlenstoff-Matrix, wobei die Matrix eingeschlossene Siliziumpartikel aufweist.

Im Schritt **280** wird anschließend das Zwischenprodukt, vorzugsweise in derselben Apparatur wie im Schritt **270** und ohne vorhergehende Abkühlung, auf eine Silizierungstemperatur im Bereich von 1400-1550°C erhöht. Die Geschwindigkeit der Temperaturerhöhung bei den Schritten **270** und **280** beträgt z.B. 1-5°C/min. Das Zwischenprodukt wird bei der Temperatur von 1400-1550°C unter leichtem Vakuum (ca. 1-5 mbar) und einer Spülung des Pyrolyseofens mit Stickstoff für ca. 4-7 Stunden siliziert. Im Schritt **280** schmelzen die Siliziumpartikel in der Matrix und flüssiges Silizium bildet mit den benachbarten Kohlenstoffatomen der Matrix das bestimmungsgemäße Siliziumcarbid (SiC).

Als Ergebnis des Silizierens im Schritt **280** entsteht so ein Wabenkörper 1 umfassend den Träger aus Kohlenstofffasern und die siliziumcarbidhaltige Matrix, wobei die Fasern des Trägers in die Matrix eingebettet sind bzw. Träger und Matrix einen keramischen Faserverbundwerkstoff bilden. Die Matrix enthält in diesem Beispiel ferner ca. 4 Gew.-% freien Kohlenstoff. Das Zielraumgewicht des Wabenkörpers liegt unter 400 kg/m³, insbesondere unter 200 kg/m³ und kann sogar 150 kg/m³ sein.

Im Schritt **290** wird der Wabenkörper 1 zur anschließenden Weiterverarbeitung in Scheiben senkrecht zu den Zellwänden der Wabenzellen, d.h. senkrecht zu der T-Richtung, zugeschnitten. So werden Wabenscheiben 29 in gewünschter Höhe mit den gewünschten Materialeigenschaften hergestellt. Ein Zuschneiden kann alternativ auch bereits nach dem Anhärten in Schritt **260** und vor dem Pyrolyse-Schritt **270** erfolgen, sodass für die Schritte **270** und **280** z.B. eine kleinere Prozesskammer eingesetzt werden kann.

**Ausführungsbeispiel 2:** Bei einem weiteren Ausführungsbeispiel wird ein mit einer Matrix-Mischung vorimprägniertes offenporiges Kohlenstofffaser-Gewebe zum Herstellen eines Wabenblocks nach dem Expansionsverfahren eingesetzt. Der Massenanteil der Kohlenstofffaser an dem vorimprägnierten Gewebe ist ca. 60 Gew.-%. Die Matrix-Mischung enthält bei diesem Beispiel Vorstufen eines Epoxidharzes (z.B. HexFlow^{®} RTM 6 von Hexcel Corp. / USA oder EPIKOTE ^{™} Resin M1-0479-JS oder EPONOL ^{™} Resin 7035 von Hexion GmbH / Deutschland) und ein dispergiertes Siliziumpulver in einem Massenverhältnis von 1,5 zu 1. Das Herstellen eines Wabenblocks durch das Expansionsverfahren wird wie oben beschrieben gemäß den Schritten **210, 220, 230** und **240** durchgeführt. Der Wabenblock nach dem Expansionsschritt stellt einen teilbeschichteten Träger dar. Der expandierte Wabenblock wird im Schritt **250** durch Eintauchen in ein Behältnis, in dem die Matrix-Mischung vorgelegt ist, mit der Matrix-Mischung getränkt bzw. imprägniert, wobei ein imprägnierter Waben-Rohling entsteht. Die Schritte der Pyrolyse **270** und des Silizierens **280,** wie auch des Zuschneidens **290** werden anschließend wie oben zum ersten Beispiel beschrieben durchgeführt.

Weitere Polymer-Harze, die die Matrix-Mischung enthalten kann, sind z.B. Polyimidharze wie Skybond^{®} 700 von Industrial Summit Technology Corp./ USA, oder Cyanatesterharze, wie z.B. PT 30 der Lonza AG / Schweiz.

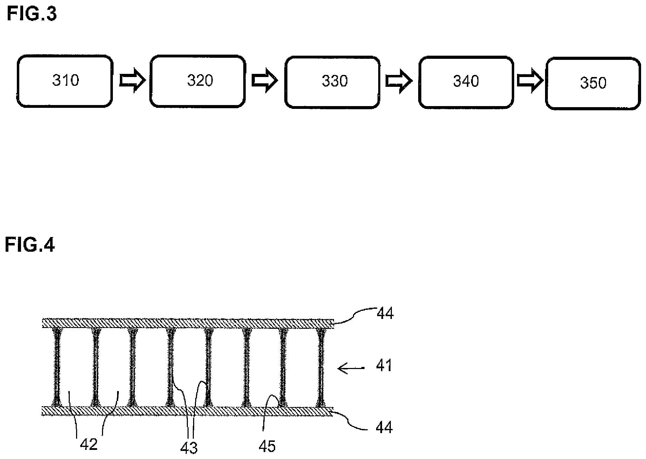

Weitere Variationen der Materialauswahl für Träger und Matrix sind anwendungsabhängig und liegen ebenfalls im Rahmen der Erfindung. **FIG. 3** zeigt ein Prozessschema für ein beispielhaftes Herstellverfahren einer faserverstärkten carbidkeramischen Sandwichstruktur umfassend ein Wabenkern. Im Schritt **310** werden eine Wabenscheibe, die wie zu oben beschrieben hergestellt wurde, sowie zwei Deckschichten in Form von Laminat aus kohlenstofffaserverstärktem Siliziumcarbid bereitgestellt. Die Laminatschichten sind dabei durch Imprägnieren von Lagen eines Kohlenstofffaser-Materials, z.B. Carbongewebe Injectex G 926 (Hexcel Corp.) oder Tenax^{®} HTA40 200 tex (3K) Style 450-5 (von Toho Tenax Europe GmbH/Deutschland), mit einer Matrix-Mischung, die Phenolharzvorstufen und dispergierte Siliziumpartikel umfasst, ggf. Aufstapeln und Verpressen mehrerer imprägnierten Lagen miteinander, gefolgt durch Pyrolyse und Silizieren (wie oben) hergestellt. Im Schritt **320** wird die Wabenscheibe außen an den Wabenstegen mit einem Klebstoff und beidseitig mit den Laminatschichten versehen, um die Laminatschichten mit der Wabenscheibe zu verkleben. Als Kleber kann dabei die vorgenannte Matrix-Mischung eingesetzt werden, die Phenolharz-Vorstufen und dispergierte Siliziumpartikel umfasst. Im Schritt **330** werden die Laminatschichten und die Wabenscheibe zu einem Sandwich gepresst, und anschließend einem Pyrolyse-Schritt **340** und einem Silizieren-Schritt **350** in einem geeigneten Prozess-Ofen unterzogen. Dies kann grundsätzlich wie oben zu **FIG.2** beschrieben erfolgen, sodass die Matrix-Mischung zwischen den Schichten zuerst carbonisiert und anschließend siliziert wird. Als Ergebnis entsteht eine hitzebeständige Leichtbau-Sandwichstruktur aus kohlenstofffaserverstärktem Siliziumcarbid, die einen Wabenkern zwischen zwei Deckschichten umfasst.

In einem weiteren Ausführungsbeispiel gemäß **FIG.3** werden die Deckschichten aus einem nicht pyrolysierten Prepreg-Material mit dem Wabenkern verklebt und zu einem Sandwich verpresst. Anschließend wird das Sandwich im Wesentlichen unter den oben beschriebenen Bedingungen pyrolysiert und siliziert. Es ist auch möglich, einen nicht pyrolysierten Waben-Rohling in Form einer Wabenscheibe mit den nicht pyrolysierten Deckschichten aus einem Prepreg-Material mit der Matrixmischung zu einem Sandwich zu verkleben und anschließend das Sandwich zu pyrolysieren und zu silizieren, um eine faserverstärkte carbidkeramische Sandwichstruktur zu erhalten.

**FIG. 4** zeigt einen Ausschnitt einer Leichtbau-Sandwichstruktur, hergestellt gemäß dem in **FIG. 3** blockschematisch dargestellten Prozessablauf. Die Sandwichstruktur nach **FIG.4** weist einen Wabenkern 41, mit Wabenzellen 42 mit Zellwänden 43 aus einem kohlenstofffaserverstärkten Siliziumcarbid auf. Der Wabenkern ist gemäß dem in FIG. 2 skizzierten Verfahren hergestellt.

Ferner weist die Sandwichstruktur zwei Deckschichten 44 aus einem kohlenstofffaserverstärkten Siliziumcarbid auf, die wie zu **FIG.3** beschrieben bereitgestellt werden können. Die Deckschichten sind durch einen Kleber 45 mit dem Wabenkern verbunden, der Kleber 45 umfasst in der fertigen Sandwichstruktur einen hohen, vorzugsweise überwiegenden Anteil Siliziumcarbid.

Eine Leichtbau-Sandwichstruktur nach FIG. 4 kann auch mit einem Wabenkörper nach dem Ausführungsbeispiel 3 (unten) hergestellt werden.

### Ausführungsbeispiel 3:

Im Schritt **210** wird eine Rolle mit einem Trägermaterial 21 bereitgestellt. Als Trägermaterial 21 wird bei diesem Beispiel ein Quarzglas- bzw. Silikatglasgewebe eingesetzt. Im Schritt **220** werden zueinander parallele Streifen 22 eines Klebers auf das abgerollte Trägermaterial 21 senkrecht zur L-Richtung bzw. der Abrollrichtung, z.B. in gleichbleibenden Abständen angebracht. Als Kleber wird bei diesem Beispiel ein Kleber auf Epoxy-Phenolbasis verwendet. Die Streifen 22 werden über die gesamte Breite des Trägermaterials 21 angebracht. Im Schritt **230** wird das Trägermaterial 21 in Bögen mit identischem Format zugeschnitten, die Bögen werden relativ zueinander in L-Richtung versetzt, z.B. um den halben Abstand der Kleber-Streifen 22, aufeinander zu einem Stapel 23 abgelegt. Der Stapel 23 wird durch An-oder Aushärten der Kleber-Streifen 22 unter Druck- und Temperatureinwirkung in einer Presse gemäß einem an sich bekannten Prozess zu einem zusammenhängenden Block verarbeitet. Im Schritt **240** erfolgt in an sich bekannter Weise die Expansion in W-Richtung so, dass ein Wabenblock 24 mit technisch hexagonalen Wabenzellen entsteht, d.h. mit Wabenzellen, die einen hexagonalen Querschnitt in der L/W Ebene aufweisen. Die Höhe des Wabenblocks 24 in der T-Richtung entspricht der Breite der Rolle des Trägermaterials 21.

Im Schritt **250** wird der Wabenblock 24 mit einer Matrix-Mischung 25 getränkt bzw. imprägniert, in diesem Ausführungsbeispiel durch vollständiges Eintauchen des Wabenblocks 24 in ein Behältnis, in dem die Matrix-Mischung 25 als Bad in ausreichender Höhe relativ zur Höhe des Wabenblocks 24 vorbereitet ist. Andere Imprägniertechniken sind ebenfalls möglich. Der Wabenblock 24 bildet somit den Träger für die durch Imprägnieren applizierte Matrix. Die Matrix-Mischung 25 umfasst in diesem Beispiel ein funktionalisierte Polysiloxan, bspw. ein Alkoxysilan (bspw. Silmer TMS, 50 bis 700 Reihe, der Fa. Siltech, wie Silmer TMS C50 oder Di-50). In diesem Beispiel umfasst die Matrix-Mischung kein Lösemittel. Ein Lösemittel, bspw. Isopropanol, kann jedoch zur Viskositäteinstellung verwendet werden. Die bevorzugte Verweilzeit im Tauchbad beträgt 2 bis 5 Minuten.

Als Ergebnis des Imprägnierens entsteht ein mit der Matrix-Mischung imprägnierter Waben-Rohling 26. Im Schritt **260** wird der imprägnierte Waben-Rohling 26 bei einer Temperatur von 150-200°C in einem Umluftofen vorgehärtet, u.a. um das Lösemittel, hier Isopropanol, zu verdampfen. Dabei wird die Matrix-Mischung zumindest teilweise vernetzt. Der Schritt wird je nach zu erreichenden Raumgewicht ggf. mehrmals wiederholt.

Im Schritt **270** wird der vorgehärtete Waben-Rohling 26 auf die Pyrolysetemperatur, ca. 400-600°C, erhitzt, sodass die Siloxanketten der Matrix-Mischung in SiOC-Keramik umgewandelt werden. Die Pyrolyse wird anschließend bei 800-900°C fortgesetzt.

Als Ergebnis, entsteht so ein Wabenkörper 1 umfassend den Träger aus Kohlenstofffasern und die Siliziumoxycarbid-Matrix, wobei die Fasern des Trägers in die Matrix eingebettet sind bzw. Träger und Matrix einen keramischen Faserverbundwerkstoff bilden.

Der Schritt 280 (s. Ausführungsbeispiel 1 oder 2) hier entfällt.

Im Schritt **290** wird der Wabenkörper 1 zur anschließenden Weiterverarbeitung in Scheiben senkrecht zu den Zellwänden der Wabenzellen, d.h. senkrecht zu der T-Richtung, zugeschnitten. So werden Wabenscheiben 29 in gewünschter Höhe mit den gewünschten Materialeigenschaften hergestellt. Ein Zuschneiden kann alternativ auch bereits nach dem Anhärten in Schritt **260** und vor dem Pyrolyse-Schritt **270** erfolgen, sodass für die Schritte **270** und **280** z.B. eine kleinere Prozesskammer eingesetzt werden kann.

### Bezugszeichenliste

FIG.1
   - L: Längsrichtung des Wabenkörpers
   - W: Querrichtung des Wabenkörpers
   - T: Wabenhöhe bzw. Wabenstärke bzw. die Höhe der Zellwände der Wabenzellen
   - 1: Wabenkörper
   - 12: Wabenzellen
   - 13: Zellwände
FIG.2
   - 21: Trägermaterial
   - 22: Kleberstreifen
   - 23: Stapel
   - 24: Wabenblock
   - 25: Matrix-Mischung
   - 26: Waben-Rohling
   - 27: Pyrolyseofen
   - 29: Wabenscheibe
Prozessschritte:
   - 210: Bereitstellen einer Rolle des Trägermaterials
   - 220: Aufbringen vom Kleber auf das Trägermaterial
   - 230: Zuschneiden des Trägermaterials, Aufstapeln und Verkleben der Bögen miteinander zu einem Block
   - 240: Expansion des Blocks
   - 250: Eintauchen des Wabenblocks in die Matrix-Mischung
   - 260: Vorhärten des Waben-Rohlings
   - 270: Pyrolyse bzw. Carbonisieren
   - 280: Silizieren
   - 290: Zuschneiden des Wabenkörpers in Wabenscheiben
FIG.3
   Verfahrensschritte:
   - 310: Bereitstellen der Wabenscheibe und der Deckschichten
   - 320: Vorlegen des Klebers und Anordnen der Wabenscheibe zwischen die Deckschichten
   - 330: Zusammenpressen der Deckschichten und der Wabenscheibe zu einem Sandwich
   - 340: Pyrolyse
   - 350: Silizieren
FIG.4
   - 41: Wabenkern
   - 42: Wabenzellen
   - 43: Zellwände
   - 44: Deckschichten
   - 45: Kleber

## Patentansprüche

1. Wabenkörper (1) aus einem Verbundwerkstoff für feuerfeste Leichtbaustrukturen, nämlich zur Verwendung als Kern (41) bzw. zur Herstellung von einem Kern (41) zwischen zwei Deckschichten (44) einer Leichtbau-Sandwichstruktur, der Wabenkörper (1) umfassend Wabenzellen (12) mit einem Querschnitt in L/W Ebene, insbesondere einem polygonalen, vorzugsweise näherungsweise hexagonalen Querschnitt, wobei Zellwände (13) der Wabenzellen (12) aus einem Verbundwerkstoff hergestellt sind, wobei der Verbundwerkstoff zumindest
- einen Träger, insbesondere ein Gewebe oder Gelege aus Fasern, und
- eine Matrix umfasst, wobei der Träger in die Matrix eingebettet ist,
**dadurch gekennzeichnet, dass** die Matrix einen siliziumbasierten Keramikwerkstoff umfasst, ausgewählt aus der Gruppe bestehend aus Siliziumcarbid, Siliziumoxycarbid, Siliziumnitrid, Siliziumcarbonitrid und Siliziumborcarbonitrid, wobei die Matrix entlang der gesamten Höhe der Zellwände (13) in T-Richtung senkrecht zur L/W-Ebene einen Massenanteil des siliziumbasierten Keramikwerkstoffs von mindestens 30 Gew.-%, insbesondere von mindestens 40 Gew.-%, vorzugsweise mehr als 80 Gew.-% aufweist.

2. Wabenkörper (1) nach Anspruch 1, **dadurch gekennzeichnet, dass** der Massenanteil des siliziumbasierten Keramikwerkstoffs in der Matrix im mittleren Bereich entlang der T-Richtung um weniger als 20 Gew.-%, insbesondere weniger als 10 Gew.-%, vorzugsweise um weniger als 1 Gew.-%, vom Massenanteil des siliziumbasierten Keramikwerkstoffs in der Matrix in den endseitigen Bereichen der Höhe der Zellwände (13) abweicht.

3. Wabenkörper (1) nach Anspruch 1 oder 2, **dadurch gekennzeichnet, dass** ein Massenanteil freien Siliziums in der Matrix höchstens 15 Gew.-%, insbesondere höchstens 10 Gew.-%, vorzugsweise höchstens 2 Gew.-%, besonders bevorzugt 0,5 Gew.-%, beträgt.

4. Wabenkörper (1) nach einem der vorhergehenden Ansprüche, **dadurch gekennzeichnet, dass** ein Massenanteil freien Kohlenstoffs in der Matrix mindestens 1 Gew.-%, insbesondere mindestens 10 Gew.-% und/oder höchstens 25 Gew.-% beträgt.

5. Wabenkörper (1) nach einem der vorhergehenden Ansprüche, **dadurch gekennzeichnet, dass** ein Massenanteil des Trägers im Verbundwerkstoff 5 Gew.-% bis 80 Gew.-% beträgt, vorzugsweise 10 Gew.-% bis 50 Gew.-% beträgt.

6. Wabenkörper (1) nach einem der vorhergehenden Ansprüche, **dadurch gekennzeichnet, dass** der Träger aus Fasern hergestellt ist, wobei insbesondere
- der Träger aus einem Gewebe, vorzugsweise aus einem einlagigen Gewebe, besonders bevorzugt aus einem Gewebe mit Leinwandbindung, hergestellt ist; und/oder
- die Fasern des Trägers Kohlenstofffasern und/oder Keramikfasern sind; und/oder
- die Fasern des Trägers Glasfasern, vorzugsweise Silikat-Glasfasern, besonders bevorzugt Quarzglasfasern sind;
- und wobei besonders bevorzugt eine Feinheit der Faser des Trägermaterials zwischen 1K und 50K, insbesondere zwischen 3K und 12K, besonders bevorzugt 3K beträgt.

7. Wabenkörper (1) nach einem der vorhergehenden Ansprüche, **dadurch gekennzeichnet, dass** die Wabenzellen (12) hexagonal sind, insbesondere hexagonal mit einem freien Durchmesser in der L/W Ebene von ≤ 50mm, insbesondere von ≤ 19,2mm, vorzugsweise ≤ 9,6mm, besonders bevorzugt ≤ 3,2mm.

8. Verfahren zum Herstellen eines Wabenkörpers (1) aus einem Verbundwerkstoff für feuerfeste Leichtbaustrukturen, umfassend einen in eine Matrix eingebetteten Träger, insbesondere nach Anspruch 1, umfassend:
- Bereitstellen eines Trägermaterials (21), insbesondere eines Gewebes oder Geleges aus Fasern, wobei das Trägermaterial (21) vorzugsweise in Form eines offenporigen luftdurchlässigen Fasergebildes hergestellt ist, und insbesondere Kohlenstofffasern und/oder Keramikfasern umfasst,
- Umformen des Trägermaterials (21) zu einem Träger (24) in einer Wabenform mit Wabenzellen, deren Zellwände aus dem Trägermaterial (21) gebildet sind, insbesondere Umformen zu einem Wabenblock (24) durch ein Expansionsverfahren,
- Imprägnieren des Trägers (24) mit einer kohlenstoffhaltigen Matrix-Mischung (25), die dispergierte Siliziumpartikel umfasst, sodass die Zellwände der Wabenzellen mit der die Siliziumpartikel enthaltenden Matrix-Mischung (25) imprägniert werden, zum Bereitstellen eines entsprechenden Waben-Rohlings (26), wobei die Siliziumpartikel vorzugsweise eine Korngrößenverteilung von 0,001 bis 1 mm, insbesondere 0,008 bis 0,09 mm, aufweisen und/oder vorzugsweise der Massenanteil der Siliziumpartikel in der Matrix-Mischung (25) 20 Gew.-% bis 60 Gew.-%, vorzugsweise 25 Gew.-% bis 45 Gew.-% beträgt,
- Erhitzen des imprägnierten Waben-Rohlings (26) auf eine Pyrolysetemperatur, und Carbonisieren der Matrix, und
- Erhitzen auf eine Silizierungstemperatur zum Verflüssigen der Siliziumpartikel und Silizieren der carbonisierten Matrix zwecks Bildung von Siliziumcarbid.

9. Verfahren zum Herstellen eines Wabenkörpers (1) aus einem Verbundwerkstoff für feuerfeste Leichtbaustrukturen, umfassend einen in eine Matrix eingebetteten Träger, insbesondere nach Anspruch 1, umfassend:
- Bereitstellen eines Trägermaterials (21), insbesondere eines Gewebes oder Geleges aus Fasern, wobei vorzugsweise das Trägermaterial (21) in Form eines offenporigen luftdurchlässigen Fasergebildes hergestellt ist, und insbesondere Glasfasern, vorzugsweise Silikat-Glasfasern, besonders bevorzugt Quarzglasfasern umfasst,
- Umformen des Trägermaterials (21) zu einem Träger (24) in einer Wabenform mit Wabenzellen, deren Zellwände aus dem Trägermaterial (21) gebildet sind, insbesondere Umformen zu einem Wabenblock (24) durch ein Expansionsverfahren,
- Imprägnieren des Trägers (24) mit einer Matrix-Mischung (25), die zumindest eine siliziumhaltige Polymervorstufe umfasst, insbesondere ein Polycarbosilan, ein Polycarbosiloxan, ein Polysiloxan, ein Polysilazan, ein Polysilan, ein Polycarbosilazan, ein Copolymer mit zwei oder mehr der vorgenannten Verbindungen und/oder eine Mischung mit zwei oder mehr der vorgenannten Verbindungen, sodass die Zellwände der Wabenzellen mit der Matrix-Mischung (25) imprägniert werden, zum Bereitstellen eines entsprechenden Waben-Rohlings (26), wobei die Matrix-Mischung (25) vorzugsweise Polyborazylen umfasst,
- Erhitzen des imprägnierten Waben-Rohlings (26) auf eine Pyrolysetemperatur, insbesondere eine Pyrolysetemperatur ≤ 1100°C, vorzugsweise ≤ 1000°C, besonders bevorzugt ≤ 900°C, zwecks Bildung einer Matrix, die einen siliziumbasierten Keramikwerkstoff enthält.

10. Verfahren nach einem der Ansprüche 8 oder 9, **dadurch gekennzeichnet, dass** das Trägermaterial (21) vor dem Umformen ein Gewebe, insbesondere ein einlagiges Gewebe und/oder Gewebe mit Leinwandbindung, mit einer Porosität von 2 Vol.-% bis 40 Vol.-%, vorzugsweise von 20 Vol.-% bis 30 Vol.-%, und/oder mit einer Maschenweite von 100 bis 800 µm, vorzugsweise 200 bis 500 µm, umfasst.

11. Verfahren nach einem der Ansprüche 8 bis 10, **dadurch gekennzeichnet,**
**dass** die Matrix-Mischung (25) mindestens eine Vorstufe für ein duroplastisches Polymer, insbesondere Ester- und/oder Phenolharz, umfasst; und/oder
**dass** die Matrix-Mischung (25) dispergierte Additive umfasst, wie bspw. Bornitrid, Siliziumcarbid, Petrolkoks, Glas, und/oder bspw. Kurzfasern, Carbon-Nanotubes oder kohlenstoffreiche Nanopartikel.

12. Verfahren nach einem der Ansprüche 8 bis 11, **dadurch gekennzeichnet, dass** nach dem Imprägnieren ein An- oder Aushärtungsschritt durchgeführt wird, wobei der mit der Matrix-Mischung (25) imprägnierte Waben-Rohling (26) unter Wärmeeinwirkung zumindest vorgehärtet wird.

13. Verfahren nach einem der Ansprüche 8 bis 12, **dadurch gekennzeichnet, dass** der Träger in Form eines Wabenblocks (24) durch ein Expansionsverfahren hergestellt wird, umfassend die Schritte:
- Bereitstellen von flächigem Trägermaterial (21), insbesondere in Form einer Rolle,
- Anbringen von parallelen Streifen eines Klebers (22), welche sich in der T-Richtung bzw. in der Richtung der Breite der Rolle erstrecken, und in regelmäßigen Abständen in der L-Richtung bzw. der Längsrichtung der Rolle senkrecht zu der T-Richtung voneinander beabstandet sind,
- Zuschneiden der Rolle zu Bögen,
- Auflegen der Bögen zu einem Stapel (23) aufeinander,
- An- oder Aushärten des Klebers, bspw. unter Druck und/oder Temperatureinwirkung, sodass der Stapel (23) zu einem zusammenhängenden Block verbunden wird,
- Expansion des Blocks in W-Richtung bzw. in Richtung der Stapelhöhe, sodass ein Wabenblock (24) mit Wabenzellen entsteht.

14. Verfahren nach einem der Ansprüche 8 bis 13, **dadurch gekennzeichnet, dass** vor oder nach der Pyrolyse oder nach dem Silizieren ein Zuschneiden des Wabenkörpers (1) in Wabenscheiben (29) quer zu den Zellwänden der Wabenzellen, insbesondere senkrecht zu der T-Richtung, durchgeführt wird.

15. Hitzebeständige, insbesondere feuerfeste, Leichtbau-Sandwichstruktur, umfassend einen Kern, der mit zwei Deckschichten, insbesondere aus einem keramischen Faserverbundwerkstoff, verbunden ist, **dadurch gekennzeichnet, dass** der Kern einen Wabenkörper (1) nach einem der Ansprüche 1 bis 7 umfasst.

16. Waben-Rohling (26) als Zwischenprodukt zum Herstellen eines Wabenkörpers (1) aus faserverstärkter Carbidkeramik, der Waben-Rohling (26) umfassend Wabenzellen mit einem Querschnitt in L/W Ebene, insbesondere einem polygonalen Querschnitt, wobei Zellwände der Wabenzellen aus einem Trägermaterial hergestellt sind, insbesondere aus einem Gewebe oder Gelege aus Fasern, das mit einer kohlenstoffhaltigen Matrix-Mischung imprägniert ist,
**dadurch gekennzeichnet, dass** die Matrix-Mischung dispergierte Siliziumpartikel umfasst, wobei der Massenanteil der Siliziumpartikel in der Matrix-Mischung im mittleren Bereich der Höhe der Zellwände, entlang einer T-Richtung senkrecht zur L/W-Ebene, um weniger als 20 Gew.- %, insbesondere weniger als 10 Gew.-%, vorzugsweise um weniger als 1 Gew.-% vom Massenanteil der Siliziumpartikel in der Matrix-Mischung in den endseitigen Bereichen der Höhe der Zellwände abweicht;
wobei die Matrix-Mischung insbesondere einen Massenanteil der Siliziumpartikel von 20 Gew.-% bis 60 Gew.-%, vorzugsweise 25 Gew.-% bis 45 Gew.-% aufweist; und/oder wobei die Matrix-Mischung insbesondere mindestens eine Vorstufe für ein duroplastisches Polymer, insbesondere Phenolharz, umfasst; und/oder
wobei die Siliziumpartikel vorzugsweise eine Korngrößenverteilung von 0,001 bis 1 mm, insbesondere vom 0,008 bis 0,09 mm aufweisen.

## Claims

1. A honeycomb body (1) of a composite material for fire-resistant lightweight structures, namely for use as a core (41) or for producing a core (41) between two cover layers (44) of a lightweight sandwich structure, the honeycomb body (1) comprising honeycomb cells (12) with a cross-section in the L/W plane, in particular a polygonal, preferably approximately hexagonal cross-section, cell walls (13) of the honeycomb cells (12) being produced from a composite material, the composite material at least comprising
- a support, in particular a woven or laid fabric made of fibers, and
- a matrix, the support being embedded in the matrix, **characterized in that** the matrix comprises a silicon-based ceramic material selected from the group consisting of silicon carbide, silicon oxycarbide, silicon nitride, silicon carbonitride and silicon-boron carbonitride, wherein, over the entire height of the cell walls (13) in the T direction perpendicular to the L/W plane, the matrix has a mass fraction of the silicon-based ceramic material of at least 30 wt.%, in particular of at least 40 wt.% and preferably of more than 80 wt.%.

2. The honeycomb body (1) as claimed in claim 1, **characterized in that** the mass fraction of the silicon-based ceramic material in the matrix in the central region along the T direction deviates by less than 20 wt.%, in particular less than 10 wt.% and preferably by less than 1 wt.%, from the mass fraction of the silicon-based ceramic material in the matrix in the end regions of the height of the cell walls (13).

3. The honeycomb body (1) as claimed in claim 1 or 2, **characterized in that** a mass fraction of free silicon in the matrix amounts to at most 15 wt.%, in particular at most 10 wt.%, preferably at most 2 wt.% and particularly preferably 0.5 wt.%.

4. The honeycomb body (1) as claimed in one of the preceding claims, **characterized in that** a mass fraction of free carbon in the matrix amounts to at least 1 wt.%, in particular at least 10 wt.% and/or at most 25 wt.%.

5. The honeycomb body (1) as claimed in one of the preceding claims, **characterized in that** a mass fraction of the support in the composite material amounts to 5 wt.% to 80 wt.% and preferably to 10 wt.% to 50 wt.%.

6. The honeycomb body (1) as claimed in one of the preceding claims, **characterized in that** the support is produced from fibers, wherein in particular
- the support is produced from a woven fabric, preferably from a single-ply woven fabric and particularly preferably from a linen weave fabric; and/or
- the fibers of the support are carbon fibers and/or ceramic fibers; and/or
- the fibers of the support are glass fibers, preferably silicate glass fibers and particularly preferably silica glass fibers;
- and wherein particularly preferably a fiber fineness of the support material amounts to between 1K and 50K, in particular between 3K and 12K and particularly preferably 3K.

7. The honeycomb body (1) as claimed in one of the preceding claims, **characterized in that** the honeycomb cells (12) are hexagonal, in particular hexagonal with a free diameter in the L/W plane of ≤ 50 mm, in particular of ≤ 19.2 mm, preferably ≤ 9.6 mm and particularly preferably ≤ 3.2 mm.

8. A method for producing a honeycomb body (1) of a composite material for fire-resistant lightweight structures, comprising a support embedded in a matrix, in particular as claimed in claim 1, comprising:
- providing a support material (21), in particular a woven or laid fabric made of fibers, wherein the support material (21) is preferably produced in the form of an open-pored air-permeable fiber structure and in particular comprises carbon fibers and/or ceramic fibers,
- forming the support material (21) into a support (24) in the form of a honeycomb with honeycomb cells, the cell walls of which are formed from the support material (21), in particular forming it into a honeycomb block (24) by an expansion method,
- impregnating the support (24) with a carbon-containing matrix mixture (25) which comprises dispersed silicon particles such that the cell walls of honeycomb cells are impregnated with the silicon particle-containing matrix mixture (25) in order to provide a corresponding honeycomb blank (26), wherein the silicon particles preferably have a grain size distribution of 0.001 to 1 mm and in particular 0.008 to 0.09 mm, and/or preferably the mass fraction of silicon particles in the matrix mixture (25) amounts to 20 wt.% to 60 wt.% and preferably 25 wt.% to 45 wt.%,
- heating the impregnated honeycomb blank (26) to a pyrolysis temperature and carbonizing the matrix, and
- heating to a siliconization temperature to liquefy the silicon particles and siliconizing the carbonized matrix for the purpose of forming silicon carbide.

9. A method for producing a honeycomb body (1) of a composite material for fire-resistant lightweight structures, comprising a support embedded in a matrix, in particular as claimed in claim 1, comprising:
- providing a support material (21), in particular a woven or laid fabric made of fibers, wherein preferably the support material (21) is produced in the form of an open-pored air-permeable fiber structure and in particular comprises glass fibers, preferably silicate glass fibers and particularly preferably silica glass fibers,
- forming the support material (21) into a support (24) in the form of a honeycomb with honeycomb cells, the cell walls of which are formed from the support material (21), in particular forming it into a honeycomb block (24) by an expansion method,
- impregnating the support (24) with a matrix mixture (25) which comprises at least one silicon-containing polymer precursor, in particular a polycarbosilane, a polycarbosiloxane, a polysiloxane, a polysilazane, a polysilane, a polycarbosilazane, a copolymer with two or more of the above-stated compounds and/or a mixture with two or more of the above-stated compounds, such that the cell walls of the honeycomb cells are impregnated with the matrix mixture (25), in order to provide a corresponding honeycomb blank (26), wherein the matrix mixture (25) preferably comprises polyborazylene,
- heating the impregnated honeycomb blank (26) to a pyrolysis temperature, in particular a pyrolysis temperature of ≤ 1100°C, preferably ≤ 1000°C and particularly preferably ≤ 900°C, for the purpose of forming a matrix which contains a silicon-based ceramic material.

10. The method as claimed in one of claims 8 or 9, **characterized in that** before forming the support material (21) comprises a woven fabric, in particular a single-ply woven fabric and/or linen weave fabric, with a porosity of 2 vol.% to 40 vol.% and preferably of 20 vol.% to 30 vol.%, and/or with a mesh size of 100 to 800 µm and preferably 200 to 500 µm.

11. The method as claimed in one of claims 8 to 10,
**characterized in that** the matrix mixture (25) comprises at least one precursor for a thermosetting polymer, in particular an ester and/or phenolic resin; and/or
**in that** the matrix mixture (25) comprises dispersed additives, such as for example boron nitride, silicon carbide, petroleum coke, glass, and/or for example short fibers, carbon nanotubes or carbon-rich nanoparticles.

12. The method as claimed in one of claims 8 to 11, **characterized in that** impregnation is followed by a partial or complete curing step, wherein the honeycomb blank (26) impregnated with the matrix mixture (25) is at least precured by exposure to heat.

13. The method as claimed in one of claims 8 to 12, **characterized in that** the support is produced in the form of a honeycomb block (24) by an expansion method comprising the steps of:
- providing a flat support material (21), in particular in the form of a roll,
- applying parallel stripes of an adhesive (22) which extend in the T direction or in the direction of the width of the roll over the width of the roll and are spaced apart from one another at regular distances in the L direction or longitudinal direction of the roll perpendicular to the T direction,
- cutting the roll into sheets,
- laying the sheets on one another to form a stack (23),
- partially or completely curing the adhesive, for example with exposure to pressure and/or heat, such that the stack (23) is bonded to form a cohesive block and,
- expanding the stack in the W direction or in the stack height direction, such that a honeycomb block (24) with honeycomb cells is obtained.

14. The method as claimed in one of claims 8 to 13, **characterized in that,** before or after pyrolysis or after siliconization, the honeycomb body (1) is cut into honeycomb slices (29) transversely to the cell walls of the honeycomb cells, in particular perpendicular to the T direction.

15. A heat-resistant, in particular fire-resistant, lightweight sandwich structure, comprising a core which is bonded to two cover layers, in particular of a ceramic fiber composite material, **characterized in that** the core comprises the honeycomb body (1) as claimed in one of claims 1 to 7.

16. A honeycomb blank (26) as an intermediate product for producing a honeycomb body (1) of fiber-reinforced carbide ceramics, the honeycomb blank (26) comprising honeycomb cells with a cross-section in the L/W plane, in particular a polygonal cross-section, the cell walls of the honeycomb cells being produced from a support material, in particular from a woven or laid fabric made of fibers, which is impregnated with a carbon-containing matrix mixture, **characterized in that** the matrix mixture comprises dispersed silicon particles, wherein the mass fraction of silicon particles in the matrix mixture in the central region of the height of the cell walls along a T direction perpendicular to the L/W plane deviates by less than 20 wt.%, in particular less than 10 wt.% and preferably by less than 1 wt.% from the mass fraction of silicon particles in the matrix mixture in the end regions of the height of the cell walls; wherein the matrix mixture in particular has a mass fraction of the silicon particles of 20 wt.% to 60 wt.% and preferably 25 wt.% to 45 wt.%; and/or wherein the matrix mixture in particular comprises at least one precursor for a thermosetting polymer, in particular a phenolic resin; and/or wherein the silicon particles preferably have a grain size distribution of 0.001 to 1 mm and in particular of 0.008 to 0.09 mm.

## Revendications

1. Corps alvéolaire (1) en matériau composite pour des structures légères réfractaires, à savoir pour l'utilisation comme âme (41) ou pour la fabrication d'une âme (41) entre deux couches de recouvrement (44) d'une structure sandwich légère, le corps alvéolaire (1) comprenant des cellules alvéolaires (12) avec une section transversale dans le plan L/W, en particulier une section transversale polygonale, de préférence approximativement hexagonale, les parois cellulaires (13) des cellules alvéolaires (12) étant fabriquées en un matériau composite, le matériau composite comprenant au moins
- un substrat, en particulier un tissu ou une nappe de fibres, et
- une matrice, le substrat étant noyé dans la matrice,
**caractérisé en ce que** la matrice comprend un matériau céramique à base de silicium, choisi dans le groupe constitué par le carbure de silicium, l'oxycarbure de silicium, le nitrure de silicium, le carbonitrure de silicium et le borocarbonitrure de silicium, la matrice présentant, le long de toute la hauteur des parois cellulaires (13) dans la direction T perpendiculaire au plan L/W, une fraction massique du matériau céramique à base de silicium d'au moins 30% en poids, en particulier d'au moins 40% en poids, de préférence de plus de 80% en poids.

2. Corps alvéolaire (1) selon la revendication 1, **caractérisé en ce que** la fraction massique du matériau céramique à base de silicium dans la matrice dans la zone centrale le long de la direction T diffère de moins de 20% en poids, en particulier de moins de 10% en poids, de préférence de moins de 1% en poids, de la fraction massique du matériau céramique à base de silicium dans la matrice dans les zones d'extrémité de la hauteur des parois cellulaires (13).

3. Corps alvéolaire (1) selon la revendication 1 ou 2, **caractérisé en ce qu'**une fraction massique de silicium libre dans la matrice est au maximum de 15% en poids, en particulier au maximum de 10% en poids, de préférence au maximum de 2% en poids, plus particulièrement de 0,5% en poids.

4. Corps alvéolaire (1) selon l'une des revendications précédentes, **caractérisé en ce qu'**une fraction massique de carbone libre dans la matrice est d'au moins 1% en poids, en particulier d'au moins 10% en poids et/ou d'au plus 25% en poids.

5. Corps alvéolaire (1) selon l'une des revendications précédentes, **caractérisé en ce qu'**une fraction massique du substrat dans le matériau composite est comprise entre 5% et 80% en poids, de préférence entre 10% et 50% en poids.

6. Corps alvéolaire (1) selon l'une des revendications précédentes, **caractérisé en ce que** le substrat est réalisé à partir de fibres, en particulier
- le substrat étant fabriqué à partir d'un tissu, de préférence un tissu à une seule couche, de manière particulièrement préférée un tissu à armure toile; et/ou
- les fibres du substrat étant des fibres de carbone et/ou des fibres de céramique; et/ou
- les fibres du substrat étant des fibres de verre, de préférence des fibres de verre de silicate, de manière particulièrement préférée des fibres de verre de quartz;
- et, de manière particulièrement préférée, une finesse de la fibre du matériau de substrat étant comprise entre 1K et 50K, en particulier entre 3K et 12K, de manière particulièrement préférée 3K.

7. Corps alvéolaire (1) selon l'une des revendications précédentes, **caractérisé en ce que** le cellules alvéolaires (12) sont hexagonales, en particulier hexagonales avec un diamètre libre dans le plan L/W de ≤ 50 mm, en particulier de ≤ 19,2 mm, de préférence de ≤ 9,6 mm, de manière particulièrement préférée de ≤ 3,2 mm.

8. Procédé de fabrication d'un corps alvéolaire (1) en matériau composite pour des structures légères réfractaires, comprenant un substrat noyé dans une matrice, notamment selon la revendication 1, comprenant:
- fournir un matériau de substrat (21), en particulier d'un tissu ou d'une nappe de fibres, le matériau de substrat (21) étant de préférence fabriqué sous la forme d'une structure fibreuse à pores ouverts et perméable à l'air, et comprenant en particulier des fibres de carbone et/ou des fibres céramiques,
- transformer le matériau de substrat (21) en un substrat (24) sous forme d'alvéoles avec des cellules alvéolaires dont les parois cellulaires sont formées à partir du matériau de substrat (21), en particulier transformation en un bloc alvéolaire (24) par un procédé d'expansion,
- imprégner le substrat (24) avec un mélange de matrice carboné (25) comprenant des particules de silicium dispersées, de sorte que les parois cellulaires des cellules alvéolaires sont imprégnées avec le mélange de matrice (25) contenant les particules de silicium, pour fournir une ébauche alvéolaire (26) correspondante, les particules de silicium présentant de préférence une répartition granulométrique de 0,001 à 1 mm, en particulier de 0,008 à 0,09 mm, et/ou de préférence la fraction massique des particules de silicium dans le mélange de matrice (25) étant de 20% en poids à 60% en poids, de préférence de 25% en poids à 45% en poids,
- chauffer l'ébauche alvéolaire imprégnée (26) à une température de pyrolyse, et carboniser la matrice, et
- chauffer à une température de silification pour liquéfier les particules de silicium et silicier la matrice carbonisée afin de former du carbure de silicium.

9. Procédé de fabrication d'un corps alvéolaire (1) en matériau composite pour des structures légères réfractaires, comprenant un substrat noyé dans une matrice, notamment selon la revendication 1, comprenant:
- fournir un matériau de substrat (21), en particulier d'un tissu ou d'une nappe de fibres, le matériau de substrat (21) étant de préférence fabriqué sous la forme d'une structure fibreuse à pores ouverts et perméable à l'air, et comprenant en particulier des fibres de verre, de préférence des fibres de verre de silicate, de manière particulièrement préférée des fibres de verre de quartz,
- transformer le matériau de substrat (21) en un substrat (24) sous forme d'alvéoles avec des cellules alvéolaires dont les parois cellulaires sont formées à partir du matériau de substrat (21), en particulier transformation en un bloc alvéolaire (24) par un procédé d'expansion,
- imprégner le substrat (24) avec un mélange de matrice (25) comprenant au moins un précurseur polymère siliceux, notamment un polycarbosilane, un polycarbosiloxane, un polysiloxane, un polysilazane, un copolymère avec deux ou plusieurs des composés susmentionnés et/ou un mélange avec deux ou plusieurs des composés susmentionnés, de sorte que les parois cellulaires des cellules alvéolaires sont imprégnées avec le mélange de matrice (25), pour fournir une ébauche alvéolaire correspondante (26), dans lequel le mélange de matrice (25) comprend de préférence du polyborazylène,
- chauffer l'ébauche alvéolaire (26) imprégnée à une température de pyrolyse, notamment une température de pyrolyse ≤ 1100°C, de préférence ≤ 1000°C, de manière particulièrement préférée ≤ 900°C, afin de former une matrice contenant un matériau céramique à base de silicium.

10. Procédé selon l'une des revendications 8 ou 9, **caractérisé en ce que** le matériau de substrat (21) comprend, avant transformation, un tissu, notamment un tissu monocouche et/ou un tissu à armure toile, présentant une porosité comprise entre 2% et 40% en volume, de préférence entre 20% et 30% en volume, et/ou une maille comprise entre 100 et 800 µm, de préférence entre 200 et 500 µm.

11. Procédé selon l'une des revendications 8 à 10,
**caractérisé en ce**
**que** le mélange de matrice (25) comprend au moins un précurseur de polymère thermodurcissable, notamment de résine ester et/ou phénolique; et/ou
**que** le mélange de matrice (25) comprend des additifs dispersés, tels que par exemple du nitrure de bore, du carbure de silicium, du coke de pétrole, du verre, et/ou par exemple des fibres courtes, des nanotubes de carbone ou des nanoparticules riches en carbone.

12. Procédé selon l'une des revendications 8 à 11, **caractérisé en ce qu'**après l'imprégnation, on réalise une étape de recuisson ou de durcissement, l'ébauche alvéolaire (26) imprégnée avec le mélange de matrice (25) étant au moins pré-durcie sous l'effet de la chaleur.

13. Procédé selon l'une des revendications 8 à 12, **caractérisé en ce que** le substrat sous forme de bloc alvéolaire (24) est réalisé par un procédé d'expansion comprenant les étapes:
- fournir un matériau substrat plan (21), notamment sous forme de rouleau,
- appliquer de bandes parallèles d'une colle (22), qui s'étendent dans la direction T ou dans la direction de la largeur du rouleau, et qui sont espacées les unes des autres à intervalles réguliers dans la direction L ou dans la direction longitudinale du rouleau, perpendiculairement à la direction T,
- découper le rouleau en feuilles,
- superposer les feuilles en une pile (23),
- recuire ou durcir la colle, par exemple sous l'effet de la pression et/ou de la température, de sorte que la pile (23) est reliée en un bloc cohérent,
- expansion du bloc dans la direction W ou dans la direction de la hauteur de la pile, de manière à obtenir un bloc alvéolaire (24) avec des cellules alvéolaires.

14. Procédé selon l'une des revendications 8 à 13, **caractérisé en ce qu'**avant ou après la pyrolyse ou après la silification, on effectue une découpe du corps alvéolaire (1) en tranches alvéolaires (29) transversalement aux parois des cellules des cellules alvéolaires, notamment perpendiculairement à la direction T.

15. Structure sandwich légère résistante à la chaleur, en particulier réfractaire, comprenant une âme reliée à deux couches de revêtement, en particulier en matériau composite céramique renforcé par des fibres, **caractérisé en ce que** l'âme comprend un corps alvéolaire (1) selon l'une des revendications 1 à 7.

16. Ébauche alvéolaire (26) comme produit intermédiaire pour la fabrication d'un corps alvéolaire (1) en céramique de carbure renforcée par des fibres, l'ébauche alvéolaire (26) comprenant des cellules alvéolaires avec une section transversale dans le plan L/W, en particulier une section transversale polygonale, les parois cellulaires des cellules alvéolaires étant fabriquées à partir d'un matériau de substrat, en particulier à partir d'un tissu ou d'une nappe de fibres, qui est imprégné avec un mélange de matrice carboné, **caractérisé en ce que** le mélange de matrice comprend des particules de silicium dispersées, la fraction massique des particules de silicium dans le mélange de matrice dans la zone centrale de la hauteur des parois cellulaires, le long d'une direction T perpendiculaire au plan L/W, s'écartant de moins de 20% en poids, en particulier de moins de 10% en poids, de préférence de moins de 1% en poids, de la fraction massique des particules de silicium dans le mélange de matrice dans les zones d'extrémité de la hauteur des parois cellulaires;
le mélange de matrice présentant en particulier une fraction massique des particules de silicium de 20% en poids à 60% en poids, de préférence de 25% en poids à 45% en poids; et/ou le mélange de matrice comprenant en particulier au moins un précurseur pour un polymère thermodurcissable, en particulier une résine phénolique; et/ou
les particules de silicium présentant de préférence une répartition granulométrique de 0,001 à 1 mm, en particulier de 0,008 à 0,09 mm.
